(19) Europäisches Patentamt
European Patent Office
Office européen des brevets

(11) EP 1 406 338 A1

(12) **EUROPEAN PATENT APPLICATION**
published in accordance with Art. 158(3) EPC

(43) Date of publication:
**07.04.2004 Bulletin 2004/15**

(21) Application number: **02733389.7**

(22) Date of filing: **07.06.2002**

(51) Int Cl.[7]: **H01M 10/40**, H01M 4/58, H01M 4/62, H01M 4/02, H01M 2/02

(86) International application number:
**PCT/JP2002/005656**

(87) International publication number:
**WO 2002/101869 (19.12.2002 Gazette 2002/51)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.06.2001 JP 2001171851**
**14.06.2001 JP 2001179748**
**26.06.2001 JP 2001192635**

(71) Applicant: **MITSUBISHI CHEMICAL CORPORATION**
**Chiyoda-ku, Tokyo 100-0005 (JP)**

(72) Inventors:
- **SEKI, Keiichi**
**c/o Mitsubishi Chemical Corporation**
**Yokohama-shi, Kanagawa 227-0033 (JP)**
- **KOBAYASHI, Mitsuharu**
**c/o Mitsubishi Chemical Corp.**
**Yokohama-shi, Kanagawa 227-0033 (JP)**
- **SAITO,Hiroyuki**
**c/o Mitsubishi Chemical Corporation**
**Yokohama-shi, Kanagawa 227-0033 (JP)**
- **YAMAMOTO, Masaki**
**Mitsubishi Chemical Corporation**
**Yokohama-shi, Kanagawa 227-0033 (JP)**

(74) Representative: **HOFFMANN - EITLE**
**Patent- und Rechtsanwälte**
**Arabellastrasse 4**
**81925 München (DE)**

# (54) LITHIUM SECONDARY CELL

(57) A safe high-performance lithium secondary cell is provided whereby bulging of a lithium secondary cell during storage at a high temperature, which is particularly problematic when a casing accommodating a cell element is a variable shape casing, is suppressed.

The present invention provides a lithium secondary cell comprising a cell element which comprises a positive electrode, a negative electrode and an electrolyte comprising a non-aqueous solvent and a solute, and a variable shape casing which accommodates the cell element, wherein the cell element contains an additive $\alpha$, and $\Delta$Eadd(AN) is smaller than $\Delta$Esol(AN), where $\Delta$Esol(AN) is the difference represented by Esol(A) - Esol(N), where Esol(N) is the enthalpy of a neutral molecule of the non-aqueous solvent, as obtained by a prescribed calculation method, and Esol(A) is the enthalpy of an anion radical formed by giving one electron to the neutral molecule, and $\Delta$Eadd(AN) is the difference represented by Eadd(A) - Eadd(N), where Eadd(N) is the enthalpy of a neutral molecule of the additive $\alpha$, as obtained by a prescribed calculation method, and Eadd(A) is the enthalpy of an anion radical formed by giving one electron to the neutral molecule.

EP 1 406 338 A1

Fig. 19

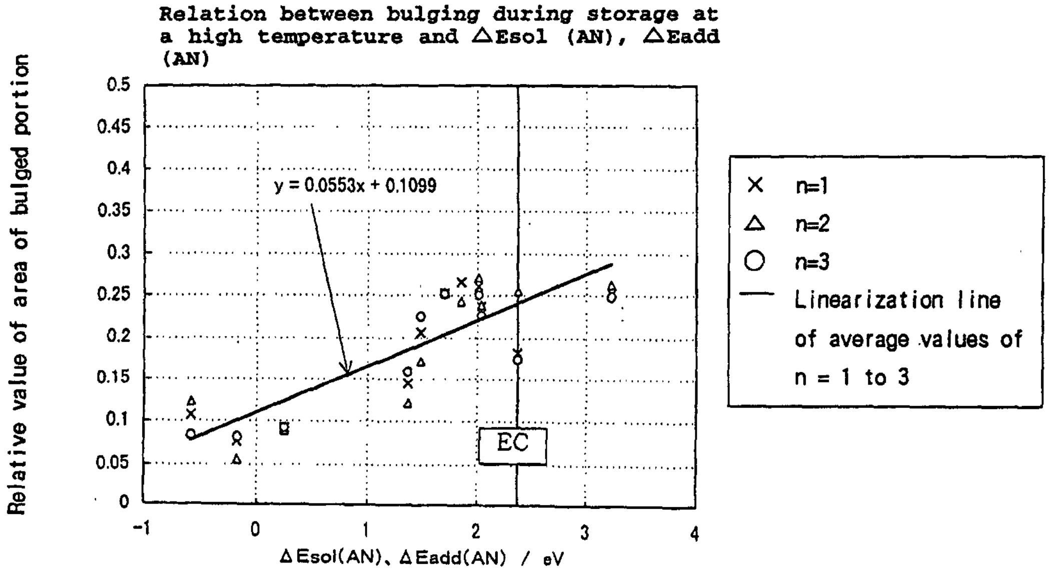
Relation between bulging during storage at a high temperature and ΔEsol (AN), ΔEadd (AN)
Relative value of area of bulged portion
0.5
0.45
0.4
0.35
0.3
0.25
0.2
0.15
0.1
0.05
0
-1
0
1
2
3
4
ΔEsol(AN)、ΔEadd(AN) / eV
y = 0.0553x + 0.1099
EC
n=1
n=2
n=3
Linearization line of average values of n = 1 to 3

## Description

### TECHNICAL FIELD

The present invention relates to a lithium secondary cell (sometimes referred to simply as a cell in this specification), particularly to a lithium secondary cell having a high level of safety imparted even in its high temperature storage.

### BACKGROUND ART

A lithium secondary cell having a cell element comprising a positive electrode, a negative electrode and an electrolyte comprising a non-aqueous solvent and a solute, sealed in a casing, is known.

The most common lithium secondary cell employs, as a casing, a metal can made of a metal such as SUS (stainless steel) and having rigidity.

In recent years, instead of such a lithium secondary cell employing a metal can, a lithium secondary cell employing a sheathing member having a variable shape, which is made of a laminated film comprising a gas barrier layer and resin layers provided on both sides of said gas barrier layer, as a casing, has been practically used. The sheathing member having a valuable shape presents a merit that the degree of freedom in designing the shape of the lithium secondary cell will be improved, as it has a high degree of freedom in designing the shape of the casing as compared with the metal can. Further, in such a lithium secondary cell employing a sheathing member having a valuable shape as the casing, it becomes possible to reduce the weight and thickness of the sheathing member, whereby it becomes possible to further reduce the size and weight of the cell and further to improve the volume energy density and the weight energy density.

Further, apart from such selection of the casing, there has been a research and development to improve the volume energy density or the weight energy density of a lithium secondary cell by increasing the capacity of the cell element itself. As such a technique to increase the capacity of the cell element itself, it is being studied to use a lithium-nickel compound oxide as a positive electrode active material. This is based on such a reason that as compared with a lithium-cobalt compound oxide ($LiCoO_2$) which is commonly used as a positive electrode active material, a lithium-nickel compound oxide has a large current capacity per unit weight and thus is a useful positive electrode material from the viewpoint of a higher capacity.

However, with a lithium secondary cell employing a casing having a variable shape, the mechanical strength of the casing is weak as compared with a conventional lithium secondary cell employing a metal can as the casing. Accordingly, the lithium secondary cell may undergo bulging when the internal pressure of the casing of the lithium secondary cell is increased by storage in a high temperature environment. This bulging of a lithium secondary cell due to an increase of the internal pressure brings about deterioration of the cell performance, deterioration of the safety and deterioration of the shape stability of the lithium secondary cell. Namely, in a case where a metal can is employed as the casing, the mechanical strength of the metal can is sufficiently high against an increase of the internal pressure occurring during the storage at a high temperature, whereby the casing will not bulge due to the increase of the internal pressure. Whereas, with the material having a variable shape, its mechanical strength is weak, whereby the lithium secondary cell will undergo bulging due to the increase of the internal pressure of the casing.

Such bulging of the lithium secondary cell brings about deterioration of the cell performance. Namely, bulging of the lithium secondary cell reduces the close contact between the electrodes and the electrolyte in the cell element accommodated in the casing, which brings about a decrease of the discharge capacity or deterioration of the cycle characteristics. Further, in a case where a casing made of a laminated film is employed as the casing having a variable shape, a part of the bonded portion of the film may undergo leakage due to bulging of the lithium secondary cell, so that moisture in the air may penetrate from this leaking portion, whereby the cell characteristics may deteriorate.

Further, such bulging of the lithium secondary cell may expose the lithium secondary cell to a dangerous state. Namely, in a case where a casing made of a laminated film is employed as the casing having a variable shape, a part of the bonded portion of the film may undergo leakage due to bulging of the lithium secondary cell, so that the electrolyte may leak from this leaking portion. Further, in a case where the increase of the internal pressure is abrupt or large, there may be a danger of rupture of the casing.

Further, such bulging of the lithium secondary cell may bring about deterioration of the dimensional stability of the lithium secondary cell, which impairs downsizing of an electrical equipment. Namely, an electronic equipment in which a lithium secondary cell is accommodated, is increasingly downsized in recent years, whereby it is desired to minimize the space to accommodate the cell. Accordingly, in a case where a lithium secondary cell will bulge due to an increase of the internal pressure of the casing during the storage at a high temperature, it is necessary to design the space to accommodate the cell taking such bulging into consideration. Thus, such bulging of the lithium secondary cell will be a hindrance to downsizing of electric equipments.

Actually, there may be a case wherein a mobile phone or the like wherein a lithium secondary cell is used as a power source, is left in a car under a high temperature. In such a case, the lithium secondary cell may be exposed to a high temperature environment of from 60 to 85°C. Also from such a situation, to control the increase of the internal pressure of a casing held under such a high temperature, is a technical subject to be solved for a lithium secondary cell having a cell element accommodated in a casing having a variable shape.

Further, by a study conducted by the present inventors, it has been found that the increase of the internal pressure becomes particularly distinct when a lithium-nickel compound oxide is used as the positive electrode active material. As compared with other lithium-transition metal compound oxides such as a lithium-cobalt compound oxide and a lithium-manganese compound oxide, the lithium-nickel compound oxide has a high cell capacity per unit weight and is a very promising positive electrode active material. However, if a lithium-nickel compound oxide is employed, the increase of the internal pressure tends to be remarkable as compared with other lithium-transition metal compound oxides. And, this problem is, in fact, a hindrance to practical application of a lithium secondary cell employing a lithium-nickel compound oxide as the positive electrode active material.

The present invention has been made in view of the above problem. It is an object of the present invention to suppress bulging of a lithium secondary cell due to an increase of the internal pressure of the casing during the storage at a high temperature, which is problematic in a case where a casing having a variable shape is employed and to improve the cell performance, safety and dimensional stability of the lithium secondary cell.

## DISCLOSURE OF THE INVENTION

Under the above-mentioned circumstances, the present inventors have conducted an extensive study to suppress bulging of a lithium secondary cell during the storage at a high temperature which is problematic with a lithium secondary cell employing a casing having a variable shape.

As a result, they have found it possible to suppress bulging of a lithium secondary cell due to an increase of the internal pressure of a casing during the storage at a high temperature, by incorporating an additive $\alpha$ to the cell element and controlling the relation between the non aqueous solvent contained in the electrolyte and the above additive $\alpha$ as shown below, and have accomplished the present invention. Namely, it has been found that the difference represented by Eadd(A) - Eadd(N) should be smaller than the difference represented by Esol(A) - Esol(N), where Esol (N) is the enthalpy of a neutral molecule of the non-aqueous solvent, Esol(A) is the enthalpy of an anion radical formed by giving one electron to the neutral molecule, Eadd(N) is the enthalpy of a neutral molecule of the additive $\alpha$, and Eadd(A) is the enthalpy of an anion radical formed by giving one electron to the neutral molecule. Namely, the gist of the present invention resides in a lithium secondary cell comprising a cell element which comprises a positive electrode, a negative electrode and an electrolyte comprising a non-aqueous solvent and a solute, and a variable shape casing which accommodates the cell element, wherein the cell element contains an additive $\alpha$, and $\Delta$Eadd(AN) is smaller than $\Delta$Esol(AN), where $\Delta$Esol(AN) is the difference represented by Esol(A) - Esol(N), where Esol(N) is the enthalpy of a neutral molecule of the non-aqueous solvent, as obtained by the following calculation method (#), and Esol(A) is the enthalpy of an anion radical formed by giving one electron to the neutral molecule, and $\Delta$Eadd(AN) is the difference represented by Eadd(A) - Eadd(N), where Eadd(N) is the enthalpy of a neutral molecule of the additive $\alpha$, as obtained by the following calculation method (#), and Eadd(A) is the enthalpy of an anion radical formed by giving one electron to the neutral molecule,

Calculation method (#):

The enthalpy of a neutral molecule and the enthalpy of an anion radical are, respectively, obtained by quantum chemical calculations by an ab initio restricted Hartree-Fock molecular orbital method employing 6-31G* basis function system.

## BRIEF DESCRIPTION OF THE DRAWINGS

Fig. 1: An exploded perspective view of a cell according to an embodiment of the present invention.
Fig. 2: A cross-sectional view of the essential part of the cell according to the embodiment of the present invention.
Fig. 3: A perspective view illustrating the cell element of the cell according to the embodiment of the present invention.
Fig. 4: A perspective view of the cell according to the embodiment of the present invention.
Fig. 5: A perspective view of a cell according to another embodiment of the present invention in the process of its production.

Fig. 6: A perspective view of a cell according to still another embodiment of the present invention in the process of its production.
Fig. 7: A perspective view of a cell according to a further different embodiment of the present invention in the process of its production.
Fig. 8: A plan view of the embodiment of Fig. 7 in the process of its production.
Fig. 9: A schematic cross-sectional view of a unit cell element.
Fig. 10: A schematic cross-sectional view of a positive electrode or a negative electrode.
Fig. 11: A schematic cross-sectional view of a cell element.
Fig. 12: Each of Figs. (A) and (B) is a vertical cross-sectional view illustrating an example of a composite member constituting a sheathing member.
Fig. 13: A vertical cross-sectional view illustrating another example of the composite material constituting a sheathing member.
Fig. 14: A perspective view of a cell according to another embodiment of the present invention in the process of its production.
Fig. 15: A plan view schematically illustrating the state of Fig. 14.
Fig. 16: An enlarged view of the essential part of Fig. 15.
Fig. 17: A cross-sectional view illustrating the state of injecting an insulating material.
Fig. 18: An enlarged cross-sectional view of a tab portion of the cell element.
Fig. 19: A graph showing the relation between ΔEadd (AN) of the additive α and ΔEsol (AN) of the non-aqueous solvent, and bulging of a lithium secondary cell during the storage at a high temperature.

Explanation of the reference numerals

| | |
|---|---|
| 1: | cell element |
| 2, 3, 6, 7, 8: | sheathing member |
| 4a, 4b: | tab |
| 4A, 4F, 4G: | bonded portion |
| 4B: | packing portion |
| 5: | insulating material |
| 11: | positive electrode |
| 11a: | positive electrode material layer |
| 12: | negative electrode |
| 12b: | negative electrode material layer |
| 13: | non-fluid electrolyte layer |
| 15a: | positive electrode current collector |
| 15b: | negative electrode current collector |
| 21: | lead |
| 22: | positive electrode current collector |
| 23: | positive electrode material layer |
| 24: | spacer (electrolyte layer) |
| 25: | negative electrode material layer |
| 26: | negative electrode current collector |
| 40: | metal layer |
| 41, 42: | synthetic resin layer |
| 43: | adhesive layer |
| 50: | injecting device |
| 51: | nozzle |

## BEST MODE FOR CARRYING OUT THE INVENTION

Now, the lithium secondary cell of the present invention will be described in detail.

[1] Additive α

The lithium secondary cell of the present invention comprises a cell element which comprises a positive electrode, a negative electrode and an electrolyte comprising a non-aqueous solvent and a solute, and a variable shape casing which accommodates the cell element, wherein the cell element contains an additive α, and ΔEadd(AN) is smaller than ΔEsol(AN), where ΔEsol(AN) is the difference represented by Esol(A) - Esol(N), where Esol(N) is the

enthalpy of a neutral molecule of the non-aqueous solvent, as obtained by the following calculation method (#), and Esol(A) is the enthalpy of an anion radical formed by giving one electron to the neutral molecule, and ΔEadd(AN) is the difference represented by Eadd(A) - Eadd(N), where Eadd(N) is the enthalpy of a neutral molecule of the additive $\alpha$, as obtained by the following calculation method (#), and Eadd(A) is the enthalpy of an anion radical formed by giving one electron to the neutral molecule,

Calculation method (#):

The enthalpy of a neutral molecule and the enthalpy of an anion radical are, respectively, obtained by quantum chemical calculations by an ab initio restricted Hartree-Fock molecular orbital method employing 6-31G* basis function system.

Namely, the enthalpy of each of the neutral molecule and the anion radical is obtained by carrying out the optimization of molecular structure by an ab initio Hartree-Fock molecular orbital method employing 6-31G* basis function system by Hople et al. However, for the evaluation of the anion radical, a restricted open-shell system molecular orbital method is employed.

Further, in the present invention, as common representation, the enthalpy of a neutral molecule may be represented by E(N), the enthalpy of an anion radical by E(A), the difference between the enthalpy of the anion radical and the enthalpy of the neutral molecule i.e.

$$E(A) - E(N) \text{ by } \Delta E(AN).$$

The reason as to why bulging of a lithium secondary cell during the storage at a high temperature, can be suppressed by making ΔEadd(AN) of the above additive $\alpha$ smaller than ΔEsol(AN) of the above non-aqueous solvent, will be explained as follows.

Namely, if a lithium secondary cell is maintained in a charged state in a high temperature environment, the surface of the electrode active material serves as a catalyst, and the non-aqueous solvent contained in the electrolyte will be decomposed into a component containing a gas such as carbon dioxide gas. And, this gas will increase the internal pressure of the casing of the lithium secondary cell, whereby bulging of the lithium secondary cell employing a variable shape casing will result.

Here, the reason why the surface of the positive electrode active surface serves as a catalyst may be explained in such a manner that, for example, in a case where the positive electrode active material is a lithium-transition metal compound oxide such as a lithium-cobalt compound oxide or a lithium-nickel compound oxide, the basicity of oxygen atoms increases by polarization in the bonding of metal atoms and oxygen atoms in a metal oxide such as cobalt oxide or nickel oxide. Particularly in a charged state, a large amount of lithium as a positive atom is discharged from the positive electrode active material, whereby a factor for neutralizing a negative charge will be little at the positive electrode active material, whereby the basicity of oxygen atoms contained in the positive electrode active material will further increase. And, in a high temperature environment, such highly basic oxygen atom sites will serve as basic points, and the non-aqueous solvent contained in the electrolyte, such as a carbonate, will be decomposed by a nucleophilic reaction to form a gas such as a carbon dioxide gas.

Accordingly, as a method to suppress the above-mentioned decomposition reaction of the non-aqueous solvent, it is effective to employ a method of passivating the surface of oxygen atoms of the metal oxide constituting the positive electrode active material, thereby to reduce the basicity. Here, to reduce the basicity, it is conceivable to employ a method of combining an acidic additive. However, by a study by the present inventors, it has been found that even if a mobile ion acid such as a protic acid or Bronsted acid is incorporated in a large amount in the cell element, no adequate effect to suppress bulging of a lithium secondary cell during the storage at a high temperature, will be obtained, and, not only that, such tends to be a cause for an increase of the resistance of the cell, which may bring about a decrease of the charge/discharge performance. Namely, in order to suppress bulging of a lithium secondary cell during the storage at a high temperature, it can not be said that the additive to be incorporated to the cell element may be any additive so long as it has acidity, but it is required to be an additive capable of sufficiently suppressing such bulging without deteriorating the cell characteristics.

Under these circumstances, the present inventors have considered that in order to reduce the basicity of the surface of the positive electrode active material, it may be effective to incorporate to the cell element a component which has an affinity with the electrical charge attributable to the basic points preset on the surface of the positive electrode active material, particularly a component which has an affinity with the electric charge attributable to the basic points preferentially more than the non-aqueous medium contained in the electrolyte. Because, if it is possible to reduce the basicity of the surface of the positive electrode active material preferentially to the decomposition reaction of the non-aqueous solvent, the decomposition reaction of the non-aqueous solvent can be suppressed, whereby

generation of a gas during the storage at a high temperature can be suppressed. On the basis of the above consideration, the present inventors have considered it effective to employ an additive α which readily resonates by accepting electrons derived from basic points rather than the non-aqueous solvent, as a component which has affinity to the electric charge derived from the basic points of the surface of the positive electrode active material preferentially to the non-aqueous solvent. Such an additive α is required to have a nature whereby it is more readily changeable from a neutral molecule to an anion radical than the non-aqueous solvent. The present inventors have used an energy gap at the time of the change from a neutral molecule to an anion radical, as an index showing this changeability. And, they have considered it effective to make the above-mentioned energy gap (ΔEadd(AN)) of the additive α smaller than the above-mentioned energy gap (ΔEsol(AN)) of the non-aqueous solvent. Because one with such energy gap being small indicates that it is readily resonant with electrons of basic points, as the neutral molecule will readily accept an electron.

As the additive α, a Lewis acid is suitable which readily resonates by accepting electrons of basic points on the surface of the positive electrode active material. And, the energy gap (ΔEadd(AN)) when this Lewis acid changes from a neutral molecule to an anion radical, is adjusted to be smaller than the above-mentioned energy gap (ΔEsol (AN)) of the non-aqueous solvent.

In the present invention, the difference between the above ΔEsol(AN) and the above ΔEadd(AN) i.e. ΔEsol (AN) - ΔEadd(AN), is usually at least 0.1 eV, preferably at least 0.2 eV, more preferably at least 0.3 eV, particularly preferably at least 0.7 eV, most preferably at least 0.95 eV. When it is at least 0.2 eV, its effect appears distinctly even if the oxidized state of a metal oxide constituting the positive electrode active material is non-uniform due to the state of the electrode. Further, when it is at least 0.3 eV, there may be a case where a voltage distribution is likely to form in the interior of the positive electrode depending upon the cell element, but even in such a case, the effect to suppress bulging at a high temperature will be distinct. On the other hand, ΔEsol(AN) - ΔEadd(AN) is usually at most 4 eV, preferably at most 3.5 eV, more preferably at most 3 eV. When it is at most 3.5 eV, the additive α tends to readily accept electrons as compared with a non-aqueous solvent contained in the electrolyte and will selectively act only against the Lewis base points on the surface of the positive electrode material.

In the present invention, the additive α is preferably a sulfur compound having at least one double bond between sulfur and oxygen. Namely, it is preferred that the additive α has a double bond between sulfur and oxygen, and its ΔEadd(AN) is smaller than ΔEsol(AN) of a common non-aqueous solvent to be used as an electrolyte for a lithium secondary cell. By using such an additive α, it readily resonates by accepting the electric charge of basic points of the positive electrode and passivates the surface of the positive electrode preferentially to the non-aqueous solvent, whereby the decomposition reaction of the non-aqueous solvent is suppressed, and bulging of the casing can effectively be prevented.

The nature of the above sulfur compound to be used in the present invention is preferably liquid or solid at a normal temperature under a normal humidity. Here, the normal temperature under a normal humidity is meant for an environment of 25°C/50% relative humidity.

Here, rather than a sulfur compound having one double bond between a sulfur atom and an oxygen atom, a sulfur compound having a plurality of such double bonds, usually has a smaller value for ΔEadd(AN), so that the difference from ΔEsol(AN) tends to be large, and also structurally, it tends to constantly take a resonant structure by accepting electrons. Accordingly, if a sulfur compound having a plurality of double bonds between sulfur atoms and oxygen atoms, is employed, the mutual action with the positive electrode surface can be facilitated, whereby bulging of a lithium secondary cell can be prevented more effectively. Further, also a sulfur compound having an oxygen atom further bonded by a single bond to a sulfur atom constituting a double bond with an oxygen atom is preferred in that it prevents bulging of a lithium secondary cell more effectively for the same reason as described above.

The above sulfur compound is preferably a compound represented by the following formula (1):

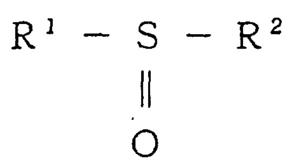

(1)

In the above formula (1), each of $R^1$ and $R^2$ which are independent of each other, is $X^1$ or $OX^1$, where $X^1$ is a $C_{1-9}$ chain or cyclic saturated hydrocarbon group, a $C_{1-9}$ chain or cyclic unsaturated hydrocarbon group or a $C_{6-9}$ aromatic hydrocarbon group, provided that $R^1$ and $R^2$ may be bonded to each other to form a 5- or 6-membered ring containing the sulfur atom. Here, when $R^1$ or $R^2$ is a functional group having oxygen bonded thereto, i.e. $O-X^1$, it is possible to effectively suppress an increase of the internal pressure of the casing.

The $C_{1-9}$ chain or cyclic saturated hydrocarbon group may, for example, be a methyl group, an ethyl group, a n-propyl group, a i-propyl group, a n-butyl group, a sec-butyl group or a cyclohexyl group. Among them, preferred

from the viewpoint of obtaining the effects of the present invention, is a methyl group or an ethyl group.

The $C_{1-9}$ chain or cyclic unsaturated hydrocarbon group may, for example, be a vinyl group, an allyl group, a butynyl group or a pentynyl group. Among them, preferred from the viewpoint of obtaining the effects of the present invention, is a vinyl group.

The $C_{6-9}$ aromatic hydrocarbon group may, for example, be a phenyl group or a 4-methylphenyl group. Among them, preferred from the viewpoint of obtaining the effects of the present invention, is a phenyl group.

Further, the total of the carbon numbers of $R^1$ and $R^2$ is more preferably from 2 to 7. The smaller the steric hindrance of a substituent bonded to the sulfur atom, the more effective the suppression against the increase of the internal pressure of the casing.

Further, $R^1$ and $R^2$ may be bonded to each other to form a 5- or 6-membered ring containing the sulfur atom. As such, it may, for example, be a bivalent free group such as a 1,4-butylene group, a 1,5-pentylene group, $-O-(CH_2)_n-$ or $-O-(CH_2)_m-O-$ (wherein each of n and m is usually an integer of from 2 to 4, and n is preferably 3 or 4, and m is preferably 2 or 3). Among these, more preferred from the viewpoint of obtaining the effects of the present invention, is $-O-(CH_2)_3-$ or $-O-(CH_2)_2-O-$, which has many oxygen atoms bonded to sulfur atom and which has little steric hindrance.

Further, the above sulfur compound is preferably a compound represented by the following formula (2):

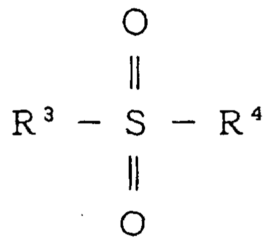

(2)

In the above formula (2), each of $R^3$ and $R^4$ which are independent of each other, is $X^2$ or $OX^2$, where $X^2$ is a $C_{1-9}$ chain or cyclic saturated hydrocarbon group, a $C_{1-9}$ chain or cyclic unsaturated hydrocarbon group or a $C_{6-9}$ aromatic hydrocarbon group, provided that $R^3$ and $R^4$ may be bonded to each other to form a 5- or 6-membered ring containing the sulfur atom. Here, when $R^3$ or $R^4$ is a functional group having oxygen bonded to $X^2$, i.e. $O-X^2$, it is possible to effectively suppress an increase of the internal pressure of the casing.

As $X^2$, the same one as $X^1$ described with respect to the formula (1) may be employed. Further, also the preferred range of the total carbon number in $R^3$ and $R^4$ is the same as the preferred range of the total carbon number in $R^1$ and $R^2$. Further, also in a case where $R^3$ and $R^4$ are bonded to each other to form a ring, the same one as in the case where $R^1$ and $R^2$ are bonded to each other to form a ring.

The above-mentioned sulfur compound may, for example, be dimethyl sulfoxide, diethyl sulfoxide, diphenyl sulfoxide, tetramethylene sulfoxide, methyl methanesulfinate, ethyl ethanesulfinate, dimethyl sulfite, diethyl sulfite, 1,2-propylene glycol sulfite, 1,3-butylene glycol sulfite, diphenyl sulfite, ethylene sulfite, vinylene sulfite, dimethyl sulfone, diethyl sulfone, ethylmethyl sulfone, diphenyl sulfone, dibenzyl sulfone, sulfolane, 3-methyl sulfolane, 3-methyl sulfolene, methyl methanesulfonate, ethyl methanesulfonate, acetyl methanesulfonate, tetrahydrofurfuryl methanesulfonate, methyl ethanesulfonate, ethyl ethanesulfonate, methyl propanesulfonate, methyl benzenesulfonate, 1,3-propanesultone, 1,4-butanesultone, dimethyl sulfate, diethyl sulfate, ethylmethyl sulfate, methylphenyl sulfate, ethylene glycol sulfuric acid ester, 1,3-propanediol sulfuric acid ester and 1,4-butanediol sulfuric acid ester. With respect to some of these sulfur compounds, the numerical values for ΔEadd(AN) i.e. the difference between Eadd(A) and Eadd(N), will be shown in Table 1.

Table 1

| | Unit: eV |
|---|---|
| Sulfur compounds | ΔEadd (AN) |
| Dimethyl sulfoxide | 3.23 |
| Diethyl sulfoxide | 1.49 |
| Diphenyl sulfoxide | 1.83 |
| Tetramethylene sulfoxide | 1.70 |

Table 1 (continued)

| Unit: eV | |
|---|---|
| Sulfur compounds | ΔEadd (AN) |
| Dimethyl sulfite | 1.85 |
| Diethyl sulfite | 2.15 |
| 1,2-Propylene glycol sulfite | 1.99 |
| 1,3-Butylene glycol sulfite | 1.86 |
| Ethylene sulfite | 2.01 |
| Dimethyl sulfone | 1.37 |
| Diethyl sulfone | 2.58 |
| Diphenyl sulfone | 1.41 |
| Dibenzyl sulfone | 0.45 |
| Sulfolane | 1.48 |
| 3-Methyl sulfolane | 1.46 |
| 3-Methyl sulfolene | 0.93 |
| Methyl methanesulfonate | 0.25 |
| Ethyl methanesulfonate | 0.24 |
| Acetyl methanesulfonate | 0.94 |
| Tetrahydrofurfuryl methanesulfonate | -0.12 |
| Methyl benzenesulfonate | 1.44 |
| 1,3-Propanesultone | -0.17 |
| 1,4-Butanesultone | 0.29 |
| Dimethyl sulfate | 2.04 |
| Diethyl sulfate, | 2.07 |
| Ethylene glycol sulfuric acid ester | -0.59 |
| 1,3-Propanediol sulfuric acid ester | 3.89 |
| 1,3-Butyleneglycol sulfuric acid ester | -0.103 |

Important in the present invention is the comparison between the value for ΔEsol(AN) of the non-aqueous solvent contained in the electrolyte and the value for ΔEadd(AN) in the above Table 1. For example, in a case where the value for ΔEsol(AN) of the non-aqueous solvent contained in the electrolyte is 4, the effects of the present invention can be obtained by using any one of sulfur compounds in the Table 1. On the other hand, for example, in a case where the value for ΔEsol(AN) is 2, the effects of the present invention can be obtained by using one having ΔEadd(AN) of less than 2 in Table 1.

However, among these sulfur compounds, if a sulfur compound having a small value for ΔEadd(AN) is employed, the difference between the value for ΔEsol(AN) and the value for ΔEadd(AN) tends to be large, whereby bulging of a lithium secondary cell during the storage at a high temperature can be suppressed more effectively.

From such a viewpoint, preferred in that ΔEadd(AN) is not more than 3, is diethyl sulfoxide (1.49 eV), diphenyl sulfoxide (1.83 eV), tetramethylene sulfoxide (1.7 eV), dimethyl sulfite (1.85 eV), diethyl sulfite (2.15 eV), 1,2-propylene glycol sulfite (1.99 eV), 1,3-butylene glycol sulfite (1.86 eV), ethylene sulfite (2.01 eV), dimethyl sulfone (1.37 eV), diethyl sulfone (2.58 eV), diphenyl sulfone (1.41 eV), dibenzyl sulfone (0.45 eV), sulfolane (1.48 eV), 3-methylsulfolane (1.46 eV), 3-methylsulfolene (0.93 eV), methyl methane sulfonate (0.25 eV), ethyl methane sulfonate (0.24 eV), acetyl methane sulfonate (0.94 eV), tetrahydrofurfuryl methane sulfonate (-0.12 eV), methyl benzene sulfonate (1.44 eV), 1,3-propanesultone (-0.17 eV), 1,4-butanesultone (0.29 eV), dimethyl sulfate (2.04 eV), diethyl sulfate (2.07 eV), ethylene glycol sulfuric acid ester (-0.59 eV) or 1,3-butylene glycol sulfuric acid ester (-0.103 eV).

Further, more preferred in that ΔEadd(AN) is not more than 2, is diethyl sulfoxide (1.49 eV), diphenyl sulfoxide

(1.83 eV), tetramethylene sulfoxide (1.7 eV), dimethyl sulfite (1.85 eV), 1,2-propylene glycol sulfite (1.99 eV), 1,3-butylene glycol sulfite (1.86 eV), dimethyl sulfone (1.37 eV), diphenyl sulfone (1.41 eV), dibenzyl sulfone (0.45 eV), sulfolane (1.48 eV), 3-methylsulfolane (1.46 eV), 3-methylsulfolene (0.93 eV), methyl methanesulfonate (0.25 eV), ethyl methanesulfonate (0.24 eV), acetyl methanesulfonate (0.94 eV), tetrahydrofurfuryl methanesulfonate (-0.12 eV), methyl benzenesulfonate (1.44 eV), 1,3-propanesulfone (-0.17 eV), 1,4-butanesultone (0.29 eV), ethylene glycol sulfuric acid ester (-0.59 eV) or 1,3-butylene glycol sulfuric acid ester (-0.103 eV).

And, most preferred in that ΔEadd(AN) is at most 1.5, is diethyl sulfoxide (1.49 eV), dimethyl sulfone (1.37 eV), diphenyl sulfone (1.41 eV), dibenzyl sulfone (0.45 eV), sulfolane (1.48 eV), 3-methyl sulfolane (1.46 eV), 3-methylsulfolene (0.93 eV), methyl methane sulfonate (0.25 eV), ethyl methane sulfonate (0.24 eV), acetyl methane sulfonate (0.94 eV), tetrahydrofurfuryl methanesulfonate (-0.12 eV), methyl benzene sulfonate (1.44 eV), 1,3-propanesultone (-0.17 eV), 1,4-butanesultone (0.29 eV), ethylene glycol sulfuric acid ester (-0.59 eV) or 1,3-butylene glycol sulfuric acid ester (-0.103 eV).

The above sulfur compound may be incorporated to any portion of the cell element, but is preferably present in the surface of the positive electrode active material with a view to preventing bulging of the casing. Accordingly, it is preferably incorporated in the positive electrode or in the electrolyte, particularly preferably in the electrolyte. When incorporated in the positive electrode or in the electrolyte, it will interact with the surface of oxygen atoms of a metal oxide at the surface of the positive electrode active material preferentially to the non-aqueous solvent contained in the electrolyte, thereby to reduce the basicity, whereby bulging of the casing during the storage at a high temperature can effectively be suppressed.

When the sulfur compound is incorporated in the electrolyte, it is incorporated usually in an amount of at least 0.001 part by weight, preferably at least 0.1 part by weight, more preferably at least 0.5 part by weight, particularly preferably at least 1 part by weight, most preferably at least 5 parts by weight, per 100 parts by weight of the content of the non-aqueous solvent and the solute contained in the electrolyte. Further, it is incorporated usually at most 30 parts by weight, preferably at most 15 parts by weight, more preferably at most 10 parts by weight, per 100 parts by weight of the content of the non-aqueous solvent and the solute. If the added amount is smaller than this range, prevention of bulging of the casing during the storage at a high temperature may sometimes be inadequate, and if the added amount exceeds this range, the electrical conductivity of the electrolyte may decrease, whereby the internal resistance of the cell may increase.

JP-A-8-241731, JP-A-8-241732, JP-A-8-321312, JP-A-2000-133305, JP 2734978, JP 2766018 and JP 2804591 respectively disclose compounds similar to the sulfur compounds among additives $\alpha$ to be used in the present invention.

However, none of these references discloses or suggests suppressing an increase of the internal pressure of the casing in a lithium secondary cell during the storage at a high temperature, by adjusting ΔEsol(AN) of the non-aqueous solvent incorporated in the electrolyte and ΔEadd(AN) of an additive $\alpha$ incorporated to the cell element to the prescribed relation.

[2] Non-aqueous solvent

The electrolyte to be used in the lithium secondary cell of the present invention comprises a non-aqueous solvent and a solute (in this specification, the solute and the non-aqueous solvent may together be referred to as an electrolytic solution or a non-aqueous electrolytic solution).

The non-aqueous solvent to be used in the present invention is required to have ΔEsol(AN) which is larger than ΔEadd(AN) of the additive $\alpha$ as described above. Such a non-aqueous solvent may, for example, be one type or a mixture of two or more types selected from cyclic carbonates such as ethylene carbonate, propylene carbonate and vinylene carbonate; non-cyclic carbonates such as dimethyl carbonate, diethyl carbonate and ethyl methyl carbonate; furans such as tetrahydrofuran and 2-methyltetrahydrofuran; glymes such as dimethoxyethane; lactones such as $\gamma$-butyl lactone; and nitriles such as acetonitrile. Among them, preferred is one type or a mixed solution of two or more types selected from cyclic carbonates, non-cyclic carbonates and lactones.

with respect to some of the non-aqueous solvents exemplified above, the values for ΔEsol(AN) i.e. the difference between Esol(A) and Esol(N), obtained by the calculation method as described above, are shown in Table 2.

Table 2

| Unit: eV | | |
|---|---|---|
| | Non-aqueous solvents | ΔEsol (AN) |
| Cyclic carbonates | Ethylene carbonate (EC) | 2.37 |
| | Propylene carbonate (PC) | 2.39 |
| | Vinylene carbonate (VC) | 2.00 |
| Non-cyclic carbonates | Dimethyl carbonate (DMC) | 2.64 |
| | Diethyl carbonate (DEC) | 2.56 |
| | Ethyl methyl carbonate (EMC) | 2.56 |
| Lactones | γ-butyl lactone (GBL) | 2.73 |

As mentioned above, important in the present invention is the comparison between the value for ΔEsol(AN) of the non-aqueous solvent obtained in the electrolyte in the above Table 2 and the value for ΔEadd(AN) of the additive α contained in the cell element. For example, in a case where propylene carbonate is employed as the non-aqueous solvent, the effects of the present invention can be obtained distinctly by using an additive α having ΔEadd(AN) of at most 2.39 eV.

Further, in a case where a plurality of solvents are used as the non-aqueous solvent, the value for ΔEsol(AN) of a solvent having the smallest value for ΔEsol(AN) among solvents contained in amounts of at least 20 vol% based on the entire non-aqueous solvent (100 vol%), is compared with the value for ΔEadd(AN) of the additive α. Because, in the present invention, the additive α is required to resonate by accepting electrons at the basic points on the surface of the positive electrode active material preferentially to all the solvents constituting the non-aqueous solvent. For example, in a case where a mixed solvent comprising equivalent amounts of ethylene carbonate and propylene carbonate, is used as the non-aqueous solvent, the value for ΔEsol(AN) to be used for the comparison with the value for ΔEadd(AN) of the additive α will be 2.37 eV of ethylene carbonate. Further, for example, in the case of an aqueous solvent having a composition vinylene carbonate:ethylenecarbonate:propylene carbonate = 10:45:45, the value for ΔEsol(AN) to be used, will be 2.37 eV of ethylene carbonate.

In the present invention, it is more preferred to incorporate a high boiling point solvent as the non-aqueous solvent with a view to more effectively suppressing bulging of the casing during the storage at a high temperature. The high boiling solvent is a solvent, of which the boiling point is usually at least 150°C, preferably at least 180°C, more preferably at least 200°C, while it is usually at most 300°C, preferably at most 270°C, more preferably at most 250°C. By using a solvent having a boiling point within such a range, it is possible to secure the safety of the cell during the. storage at a high temperature. Such a solvent may, for example, be ethylene carbonate (boiling point: 243°C), propylene carbonate (boiling point: 240°C) or γ-butyrolactone (boiling point: 204°C). Such high boiling point solvents may be used alone or in combination as a mixture of plurality of them, or may be used in combination with a low boiling point solvent (one having a boiling point of not higher than 150°C in the present invention). Further, "a boiling point of X°C" means that the vapor pressure would not exceed 1 atm even when heated from room temperature to X°C under a pressure of 1 atm.

[3] Other components of the lithium secondary cell

The lithium secondary cell of the present invention comprises a cell element which comprises a positive electrode, a negative electrode and an electrolyte comprising a non-aqueous solvent and a solute, and a variable shape casing which accommodates the cell element.

[3-1] Positive electrode and negative electrode

[A] Positive electrode active material

The positive electrode of the lithium secondary cell of the present invention usually has a structure comprising a current collector and a positive electrode material layer formed thereon, and the positive electrode material layer usually contains an electrode active material capable of absorbing and desorbing Li.

As the positive electrode material to be used for the positive electrode, various types of inorganic compounds such as a transition metal oxide, a compound oxide of lithium and a transition metal and a transition metal sulfide, may

be mentioned. Here, as the transition metal, Fe, Co, Ni or Mn may, for example, be used. Particularly, a transition metal oxide powder, such as MnO, $V_2O_5$, $V_6O_{13}$ or $TiO_2$, a compound oxide powder of lithium and a transition metal, such as lithium-nickel compound oxide, lithium-cobalt compound oxide or lithium-manganese compound oxide, a transition metal sulfide powder, such as $TiS_2$, FeS or $MoS_2$, may be mentioned. These compounds may be ones having elements partially substituted in order to improve the characteristics. Further, an organic compound such as polyaniline, polypyrrole, polyacene, a disulfide type compound, a polysulfide type compound or a N-fluoropyridinium salt, may also be used. These inorganic compounds and organic compounds may be used as a mixture. The particle diameter of the positive electrode active material is usually from 1 to 30 μm, preferably from 1 to 10 μm. Cell performance such as rate characteristics or cycle characteristics tends to decrease, if the particle diameter is too large or too small.

Among these positive electrode active materials, preferred is a lithium-transition metal compound oxide such as a lithium-cobalt compound oxide, a lithium-nickel compound oxide or a lithium-manganese compound oxide, with a view to obtaining a high performance lithium secondary cell.

In the present invention, it is particularly preferred to incorporate a lithium-nickel compound oxide in the positive electrode active material. The lithium-nickel compound oxide has a large current capacity per unit weight, and with a cell employing it, the capacity can be made high, while the effects of the present invention can be obtained remarkably by controlling the relation between the above non-aqueous solvent and the above additive α, as the lithium secondary cell is otherwise susceptible to bulging during the storage at a high temperature.

The lithium-nickel compound oxide is an oxide containing at least lithium and nickel. As the lithium-nickel compound oxide, a lithium-nickel compound oxide such as $LiNiO_2$ having a layer structure of e.g. a α-$NaFeO_2$ structure, is preferred. As the particular composition, $LiNiO_2$ or $LiNi_2O_4$ may, for example, be mentioned. In this case, the lithium-nickel compound oxide may be one wherein a part of the sites occupied by Ni is substituted by an element other than Ni. By substituting a part of Ni sites by another element, the stability of the crystal structure can be improved, and lowering of the capacity, induced by the movement of a part of Ni elements to the Li sites at the time of repeated charge-discharge operation, is inhibited, whereby the cycle characteristics are also improved. Further, by substituting a part of Ni sites by an element other than Ni, the starting temperature of an exothermic reaction measured by DSC (Differential Scanning Calorimetry) shifts to a higher temperature side, whereby a heat-induced overdrive reaction of the lithium-nickel compound oxide is prevented even if the cell temperature rises, and consequently, the safety during the storage at a high temperature can be improved.

When a part of sites occupied by Ni, is substituted by an element other than Ni, the element (hereinafter referred to as the substituting element) may, for example, be Al, Ti, V, Cr, Mn, Fe, Co, Li, Cu, Zn, Mg, Ga or Zr. Of course, Ni sites may be substituted by two or more types of other elements. The substituting element may be preferably Al, Cr, Fe, Co, Li, Mg, Ga or Mn, more preferably Al or Co. By such substitution of a part of Ni elements by Co or Al, the effect of improving the cycle characteristics and the safety will increase.

When the substituting element substitutes the Ni sites, its proportion is usually at least 2.5 mol%, preferably at least 5 mol%, against Ni element, and usually at most 50 mol%, preferably at most 30 mol%, against Ni element. If the proportion of the substitution is too small, the effect on improving e.g. the cycle characteristics may not be sufficient, and if it is too large, the capacity may decrease when a cell is constituted.

In the above-mentioned composition, there may be a small amount of oxygen deficiency or indefiniteness. Further, a part of oxygen sites may be substituted by sulfur or a halogen element.

In the present invention, the lithium-nickel compound oxide is particularly preferably a compound wherein Ni sites are unsubstituted or substituted by Co and Al, which is represented by the following formula (3):

$$Li_aNi_XCo_YAl_ZO_2 \qquad (3)$$

In the formula (3), a is a number which changes according to the state of charging or discharging in the cell, and is a number usually in the range of at least 0, preferably at least 0.7, and usually at most 1.1. Further, X is a number usually in the range of at least 0.5, preferably at least 0.7, and usually at most 0.9. Y is a number usually in the range of at least 0, preferably at least 0.1, and usually at most 0.5, preferably at most 0.3. If Y is larger than this range, the capacity decreases, and if it is smaller than this range, the effect becomes insufficient. Z is a number usually in the range of at least 0, and usually at most 0.1, preferably at most 0.05. If it is larger than this range, the capacity decreases, and if it is smaller than this range, the effect becomes insufficient. The above-mentioned X, Y and Z satisfy a relation of $0.9 \leqq X+Y+Z \leqq 1.1$, but usually 1.0. With the composition represented by the formula (3), by the substitution of a part of Ni sites by Co, the effect of improving the cycle characteristics and the safety will be increased as described above, and further, by the substitution of a part of Ni sites by Al, the further improvement of the cycle characteristics and the safety will be achieved.

The specific surface area of the lithium-nickel compound oxide used in the present invention, is usually at

least 0.01 $m^2/g$, preferably at least 0.1 $m^2/g$, more preferably at least 0.5 $m^2/g$, and usually at most 10 $m^2/g$, preferably at most 5 $m^2/g$, more preferably at most 2 $m^2/g$. If the specific surface area is too small, the rate characteristics and/or the capacity tends to be low, and if it is too large, an undesirable reaction with e.g. the electrolytic solution may be induced and the cycle characteristics may be lowered. The measurement of the specific surface area is according to BET method.

The average secondary particle diameter of the lithium-nickel compound oxide used in the present invention is usually at least 0.1 μm, preferably at least 0.2 μm, more preferably at least 0.3 μm, most preferably at least 0.5 μm, and usually at most 300 μm, preferably at most 100 μm, more preferably at most 50 μm, most preferably at most 20 μm. If the average secondary particle diameter is too small, the cell's cycle deterioration may become large or a safety problem may occur, and if it is too large, the internal resistance of the cell becomes large and it tends to be difficult to obtain a sufficient output.

As the positive electrode active material, the lithium-nickel compound oxide may be used alone, but it may be used in combination with another lithium-transition metal compound oxide. As such a lithium-transition metal compound oxide, a lithium-cobalt compound oxide may be mentioned. The lithium-cobalt compound oxide is an oxide comprising at least lithium and cobalt. The lithium-cobalt compound oxide has a flat discharge curve and thus is a useful positive electrode active material excellent in the rate characteristics. As the lithium-cobalt compound oxide, $LiCoO_2$ having a layer structure may, for example, be mentioned. Further, the lithium-cobalt compound oxide may be one wherein a part of the sites occupied by Co, is substituted by an element other than Co. By such substitution of the Co sites by another element, the cycle characteristics or the rate characteristics of the cell may sometimes be improved. When a part of the sites occupied by Co, is substituted by an element other than Co, the substituting element may, for example, be Al, Ti, V, Cr, Mn, Fe, Li, Ni, Cu, Zn, Mg, Ga, Zr, Sn, Sb or Ge, and is preferably Al, Cr, Fe, Li, Ni, Mg, Ga, Zr, Sn, Sb or Ge, more preferably Al, Mg, Zr or Sn. The Co sites may be substituted by two or more types of such other elements.

When a substituting element substitutes the Co sites, its proportion is usually at least 0.03 mol%, preferably at least 0.05 mol%, against Co element, and usually at most 30 mol%, preferably at most 20 mol%, against Co element. If the proportion of substitution is too small, the improvement of the stability may not be sufficient, and if it is too large, the capacity may decrease when a cell is constituted.

The lithium-cobalt compound oxide is usually represented by $LiCoO_2$ as a basic composition before charging, but as mentioned above, a part of Co sites may be substituted by other elements. Further, in the above-mentioned composition formula, there may be a small amount of oxygen deficiency or indefiniteness, and a part of oxygen sites may be substituted by sulfur or a halogen element. Further, in the above-mentioned composition formula, the amount of lithium may be made to be excess or deficient.

The specific surface area of the lithium-cobalt compound oxide is usually at least 0.01 $m^2/g$, preferably at least 0.1 $m^2/g$, more preferably at least 0.4 $m^2/g$, and usually at most 10 $m^2/g$, preferably at most 5.0 $m^2/g$, more preferably at most 2.0 $m^2/g$. If the specific surface area is too small, the rate characteristics are lowered and the capacity is also lowered, and if it is too large, an undesirable reaction with e.g. the electrolytic solution may be induced, and the cycle characteristics may be lowered. The measurement of the specific surface area is according to BET method.

The average secondary particle diameter of the lithium-cobalt compound oxide is usually at least 0.1 μm, preferably at least 0.2 μm, more preferably at least 0.3 μm, most preferably at least 0.5 μm, and usually at most 300 μm, preferably at most 100 μm, more preferably at most 50 μm, most preferably at most 20 μm. If the average secondary particle diameter is too small, the cell's cycle deterioration may become large, or a safety problem may occur, and if it is too large, the internal resistance of the cell becomes large, and it tends to be difficult to obtain a sufficient output.

[B] Organic acid and/or lithium salt of organic acid

In the present invention, the positive electrode preferably contains an organic acid and/or a lithium salt of an organic acid. When the positive electrode contains an organic acid and/or a lithium salt of an organic acid, and the above-mentioned additive $\alpha$ is incorporated in the cell element, it becomes possible to more effectively suppress an increase of the internal pressure of the casing during the storage at a high temperature.

The above organic acid is not particularly limited, and it may, for example, be acetic acid, propionic acid, stearic acid, glyoxylic acid, pyruvic acid, acetoacetic acid, levulinic acid, phenylacetic acid, benzoylpropionic acid, benzoic acid, oxalic acid, malonic acid, succinic acid, glutaric acid, adipic acid, maleic acid, phthalic acid, trimellitic acid, polyacrylic acid, polymethacrylic acid, tricarbarylic acid or benzene tricarboxylic acid. Further, the lithium salt of an organic acid is also not particularly limited, and lithium salts of the above organic acids may, for example, be mentioned.

Among the above organic acids, preferred is a bivalent or higher valent organic acid. By using a bivalent or higher valent organic acid, it becomes possible to effectively suppress an increase of the internal pressure of the casing. The bivalent or higher valent organic acid may, for example, be a bivalent organic acid or a trivalent organic acid. The

bivalent organic acid may, for example, be an aliphatic saturated dicarboxylic acid, an aliphatic unsaturated dicarboxylic acid or an aromatic dicarboxylic acid. As a specific compound of the aliphatic saturated dicarboxylic acid, oxalic acid, malonic acid, succinic acid or glutaric acid may, for example, be mentioned. As a specific compound of the aliphatic unsaturated dicarboxylic acid, maleic acid, may, for example, be mentioned. As a specific compound of the aromatic carboxylic acid, phthalic acid may, for example, be mentioned. As the trivalent organic acid, tricarbarylic acid or benzene tricarboxylic acid may, for example, be mentioned.

Further, the above-mentioned lithium salt of an organic acid is also preferably a lithium salt of a bivalent or higher valent organic acid, and for example, lithium salts of the above-mentioned bivalent or trivalent organic acids may be mentioned.

As the organic acid to be used in the present invention, it is preferred to employ oxalic acid or succinic acid. It is more preferred to employ oxalic acid. With such an organic acid, the molecular size is small, and the effect to control an increase of the internal pressure is large. For the same reason as for the above organic acid, it is preferred to use a lithium salt of oxalic acid or succinic acid as the lithium salt of an organic acid, and it is more preferred to employ a lithium salt of oxalic acid. If such an organic acid and/or a lithium salt of an organic acid is used in combination with the additive α, it becomes possible to more effectively suppress an increase of the internal pressure of the casing during the storage at a high temperature.

The organic acid and/or the lithium salt of an organic acid to be used in the present invention, is contained usually in an amount of at least 0.1 part by weight, preferably at least 0.2 part by weight, more preferably at least 0.3 part by weight and usually at most 1 part by weight, preferably at most 0.8 part by weight, more preferably at most 0.6 part by weight, based on the weight, as 100 parts, obtained by deducting the weight of the organic acid and/or the lithium salt of an organic acid from the total weight of the positive electrode material layer which will be described hereinafter. If the amount is less than this range, suppression of the increase of the internal pressure of the casing during the storage at a high temperature may sometimes be inadequate. On the other hand, if the amount exceeds this range, the surface of the positive electrode active material tends to be covered with an excess lithium ion non-permeable coating film, whereby there may sometimes be an adverse effect to the charge/discharge characteristics of the cell.

Further, the content of the above organic acid and/or the lithium salt of an organic acid to the additive α is usually at least 1 part by weight, preferably at least 5 parts by weight, more preferably at least 10 parts by weight, and usually at most 150 parts by weight, preferably at most 130 parts by weight, more preferably at most 120 parts by weight, per 100 parts by weight of the additive α.

In order to increase the effect for suppressing an increase of the internal pressure in the casing during the storage at a high temperature, it is more effective to incorporate the additive α in the cell element than to incorporate the organic acid and/or the lithium salt of an organic acid in the positive electrode. However, in a case where the content of the additive α in the cell element is limited in view of e.g. the cell characteristics, the above organic acid and/or the lithium salt of an organic acid may be incorporated in the positive electrode within the above-mentioned range, whereby it becomes possible to effectively suppress an increase of the internal pressure of the casing during the storage at a high temperature while maintaining the cell characteristics.

A method to let the above organic acid and/or the lithium salt of an organic acid be present in the positive electrode, will be described. As such a method, for example, the organic acid and/or the lithium salt of an organic acid may be dissolved in a suitable solvent, and a positive electrode active material is wetted with this solution, whereupon the solvent is removed to obtain a positive electrode active material containing the above organic acid or the like, and if this positive electrode material is incorporated to the positive electrode, the above organic acid or the like may consequently be present in the positive electrode.

Otherwise, in a case where using a coating material for the preparation of a positive electrode having the material constituting the positive electrode contained in a solvent, such a coating material is coated and dried on a current collector to obtain a positive electrode, the organic acid and/or the lithium salt of an organic acid may be incorporated to the coating material for the preparation of a positive electrode, whereby the above organic acid or the like may consequently be present in the positive electrode. As a method for incorporating the above organic acid or the like to the coating material for the preparation of a positive electrode, a method may, for example, be mentioned which comprises a step of dissolving the organic acid and/or the lithium salt of an organic acid in a solvent (such as n-methylpyrrolidone) to be used for the above coating material and wetting a positive electrode active material with this solution, and a step of then incorporating the rest of the material constituting the positive electrode to obtain a coating material. This method is preferred, since the solvent is common for the above wetting step and the above coating material preparation step, whereby it is unnecessary to remove the solvent after the wetting step, and the production efficiency will thereby be improved. As a method for further improving the production efficiency, a method may be mentioned in which the organic acid and/or the lithium salt of an organic acid, and other materials constituting the positive electrode, are put and mixed in a solvent all at once to prepare a coating material for the preparation of a positive electrode. In such a case, the organic acid and/or the lithium salt of an organic acid may be put into the above

solvent as it is, or the organic acid and/or the lithium salt of an organic acid may previously be dissolved in the solvent to be used for the coating material for the preparation of a positive electrode, and this solution may be introduced. In a case where the organic acid and/or the lithium salt of an organic acid is solid, the latter method is effective.

JP-A-2001-35495 discloses organic acids similar to the organic acids to be used in the present invention. However, this reference neither discloses nor suggests suppressing an increase of the internal pressure of the casing in a lithium secondary cell during the storage at a high temperature by adjusting ΔEsol(AN) of a non-aqueous solvent contained in an electrolyte and ΔEadd(AN) of an additive $\alpha$ to the prescribed relation.

[C] Negative electrode active material

The negative electrode to be used for the lithium secondary cell of the present invention usually comprises a current collector and a negative electrode material layer formed thereon, and the negative electrode material layer usually contains a negative electrode active material capable of absorbing and desorbing Li.

As such a negative electrode active material, a carbon type active material may be mentioned. The carbon type active material may, for example, be graphite, coal-based coke, petroleum-based coke, a carbonized material of coal-based pitch, a carbonized material of petroleum-based pitch, a carbonized material obtained by subjecting such pitch to oxidation treatment, needle coke, pitch coke, a carbonized material of e.g. a phenol resin or crystalline cellulose, or a carbon material obtained by partially graphitizing it, furnace black, acetylene black or pitch-based carbon fiber. Further, such a carbon type active material may be used in the form of a mixture with a metal or its salt or oxide, or in the form of a coated product. Other than the above carbon type active materials, as the negative electrode active material, an oxide or sulfate of e.g. silicon, tin, zinc, manganese, iron or nickel, metal lithium, a lithium alloy such as Li-Al, Li-Bi-Cd or Li-Sn-Cd, a lithium-transition metal nitride, or a metal such as silicon or tin, may also be used. The particle diameter of such a negative electrode active material is usually from 1 to 50 µm, preferably from 5 to 30 µm. If it is too large or too small, the cell characteristics such as the initial efficiency, the rate characteristics and the cycle characteristics, tend to deteriorate. Of course, two or more negative electrode active materials selected from the above may be used in combination.

[D] Other materials contained in the positive electrode and the negative electrode

The positive electrode material layer and the negative electrode material layer may contain a binder in addition to the above-described positive electrode active material and the negative electrode active material (in this specification, the positive electrode active material and negative electrode active material may generally be referred to as an active material). The content of the binder per 100 parts by weight of the active material, is usually at least 0.01 part by weight, preferably at least 0.1 part by weight, more preferably at least 1 part by weight and usually at most 50 parts by weight, preferably at most 30 parts by weight, more preferably at most 15 parts by weight. If the amount of binder is too small, a strong positive electrode tends to be hardly formed. If the amount of the binder is too large, the energy density or the cycle characteristics may deteriorate.

As the binder, various resins, such as an alkane type polymer such as polyethylene, polypropylene or poly-1,1-dimethylethylene; an unsaturated type polymer such as polybutadiene or polyisoprene; a polymer having a ring such as polystyrene, polymethylstyrene, polyvinyl pyridine or poly-N-vinyl pyrrolidone; an acryl derivative type polymer such as polymethyl methacrylate, polyethyl methacrylate, polybutyl methacrylate, polymethyl acrylate, polyethyl acrylate, polyacrylic acid, polymethacrylic acid or polyacrylamide; a fluorine type resin such as polyvinyl fluoride, polyvinylidene fluoride or polytetrafluoroethylene; a CN group-containing polymer such as polyacrylonitrile or polyvinylidene cyanide; a polyvinyl alcohol type polymer such as polyvinyl acetate or polyvinyl alcohol; a halogen-containing polymer such as polyvinyl chloride or polyvinylidene chloride; and a conductive polymer such as polyaniline, may be used. Further, e.g. mixtures, modified products, derivatives, random copolymers, alternate copolymers, graft-copolymers or block copolymers of the above-mentioned polymers, may also be used. Further, an inorganic compound such as a silicate or glass may also be used. In the present invention, it is preferred to use a fluorine type resin such as polyvinyl fluoride, polyvinylidene fluoride or polytetrafluoroethylene.

The weight average molecular weight of the binder is usually at least 1000, preferably at least 10000, more preferably at least 20000 and usually at most 5000000, preferably at most 1000000, more preferably at most 300000. If it is too low, the mechanical strength of the electrode may deteriorate. If it is too high, the viscosity of the coating material at the time of producing the positive electrode (or the negative electrode) by coating the coating material for the preparation of a positive electrode (or the coating material for the preparation of a negative electrode) on a current collector, tends to be high, whereby it tends to be difficult to form a positive electrode material layer (or a negative electrode material layer).

Further, the positive electrode material layer and the negative electrode material layer may contain an additive, powder, filler, etc. to provide various functions, such as a conductive material or a reinforcing material, as the case

requires. The conductive material is not particularly limited so long as it is capable of imparting electrical conductivity when mixed to the above-mentioned active material in an appropriate amount, and it may usually be a carbon powder such as acetylene black, carbon black or graphite, or a fiber or foil of various metals. As the reinforcing material, various inorganic or organic spherical or fibrous fillers, etc. may be used.

As the material for current collectors to be used for the positive electrode and the negative electrode, it is usually possible to employ a metal such as aluminum, copper, nickel, tin or stainless steel, an alloy of such a metal, etc. In such a case, as the current collector for the positive electrode, aluminum is usually employed, and as the current collector for the negative electrode, copper is usually employed. The shape of the current collector is not particularly limited, and for example, a plate-shape or a mesh-shape may be mentioned. The thickness of the current collector is usually from 1 to 50 μm, preferably from 1 to 30 μm. If it is too thin, the mechanical strength tends to be weak, and if it is too thick, the cell tends to be large, and the space occupying in the cell tends to be large, whereby the energy density of the cell tends to be small.

The thickness of the positive electrode and the negative electrode is usually at least 1 μm, preferably at least 10 μm and usually at most 500 μm and preferably at most 200 μm. If it is too thick or too thin, the cell performance such as the capacity or rate characteristics tend to deteriorate.

The method for producing the positive electrode (or the negative electrode) is not particularly limited, and for example, it may be produced by coating a current collector with a coating material for the preparation of a positive electrode (or a negative electrode) having an active material and an optional binder, conductive material, etc. contained in a solvent (such as N-methylpyrrolidone), followed by drying. Otherwise, it may for example, be produced by kneading an active material and an optional binder, conductive material, etc. without using a solvent, followed by press-bonding to a current collector. In the present invention, the positive electrode is preferably produced by the former method employing a coating material for the preparation of a positive electrode. When the former method is employed, the organic acid and/or the lithium salt of an organic acid can readily be uniformly distributed in the positive electrode. Further, the method for letting the organic acid and/or the lithium salt of an organic acid be present in the positive electrode, is as described above.

[3-2] Electrolyte

The electrolyte contains a non-aqueous electrolytic solution comprising a non-aqueous solvent and a solute. The non-aqueous solvent is as already described in [2].

As the solute, any conventional lithium salt may be employed. It may, for example, be $LiClO_4$, $LiAsF_6$, $LiPF_6$, $LiBF_4$, $LiB(C_6H_5)_4$, $CH_3SO_3Li$, $CF_3SO_3Li$, $LiN(SO_2CF_3)_2$, $LiN(SO_2C_2F_5)_2$ , $LiC(SO_2CF_3)_3$, $LiSbF_6$ or LiSCN. At least one of them may be employed. Among them, $LiClO_4$ or $LiPF_6$ is particularly preferred, since the effect of the present invention will be thereby distinct. The content of such a solute in the non-aqueous electrolytic solution is usually from 0.5 to 2.5 mol/l.

Further, the non-aqueous electrolytic solution may further contain an additive to secure the safety or cell characteristics (such as cycle characteristics), in addition to the above solute and non-aqueous solvent.

In the present invention, the electrolyte preferably contains not only the non-aqueous solvent and solute but also a polymer. By incorporating the polymer, the electrolyte will be non-fluid, whereby the liquid-maintaining property will be improved, whereby liquid leakage can be prevented, and thus safety during the storage at a high temperature will be more improved. On the other hand, due to an increase of the internal pressure of the casing during the storage of a lithium secondary cell at a high temperature, the polymer contained in the electrolyte may sometimes peel from the surface of the electrode. Such peeling of the polymer substantially increases the internal resistance of the cell. Accordingly, in a case where a polymer is incorporated in the electrolyte, the necessity to suppress an increase of the internal pressure of the casing during the storage at a high temperature, by incorporating the additive $\alpha$ in the cell element, becomes particularly high.

The polymer to be contained in the electrolyte, is not particularly limited so long as it is capable of securing the liquid-maintaining property of the electrolyte to some extent. For example, an acrylic polymer such as polymethyl methacrylate, an alkylene oxide type polymer having alkylene oxide units, or a fluorine type polymer such as polyvinylidene fluoride or a vinylidene fluoride/hexafluoropropylene copolymer, may, for example, be mentioned. Among these polymers, it is preferred to employ a polymer (which will be referred to as "a cross-linkable polymer" in this specification) having a linkage (crosslinkage) formed to bridge optional two atoms in a different molecule comprising atoms bonded to form a chain structure.

The material which constitutes the basic structure of the crosslinkable polymer may, for example, be one formed by polycondensation, such as a polyester, a polyamide, a polycarbonate or a polyimide, one formed by polyaddition, such as a polyurethane or a polyurea, or one formed by addition polymerization, such as an acrylic polymer such as polymethyl methacrylate or a polyvinyl polymer such as a polyvinyl acetate or a polyvinyl chloride.

In the present invention, it is preferred to use a polymer to be formed by addition polymerization, whereby the

control of the polymerization is easy and there will be no formation of a by-product during the polymerization, since it is preferred to carry out polymerization after impregnation to a spacer, (which will be described hereinafter). As such a polymer, an acrylic polymer may be mentioned. The acrylic polymer is a material which is preferred also from the cell capacity or the cell characteristics such as rate characteristics or mechanical strength.

As such an acrylic polymer, a polymer obtainable by polymerization of a monomer having an acryloyl group, is particularly preferred. The monomer having an acryloyl group may, for example, be a monoacrylate such as methyl acrylate, ethyl acrylate, butyl acrylate, acrylamide, 2-ethoxyethyl acrylate, diethylene glycol ethyl ether acrylate, a polyethylene glycol alkyl ether acrylate, a polypropylene glycol alkyl ether acrylate or 2-cyanoethyl acrylate; an alkane diol diacrylate such as 1,2-butanediol diacrylate, 1,3-butanediol diacrylate, 1,4-butanediol diacrylate, neopentanediol diacrylate, or 1,6-hexanediol diacrylate; a polyethylene glycol diacrylate such as ethylene glycol diacrylate, diethylene glycol diacrylate, triethylene glycol diacrylate or tetraethylene glycol diacrylate; a propylene glycol diacrylate such as propylene glycol diacrylate, dipropylene glycol diacrylate, tripropylene glycol diacrylate or tetrapropylene glycol diacrylate; bisphenol F ethoxylate diacrylate, bisphenol F ethoxylate dimethacrylate, bisphenol A ethoxylate diacrylate, trimethylolpropane triacrylate, trimethylolpropane ethoxylate triacrylate, trimethylolpropane propoxylate triacrylate, isocyanuric acid ethoxylate triacrylate, glycerol ethoxylate triacrylate, glycerol propoxylate triacrylate, pentaerythritol ethoxylate tetraacrylate, ditrimethylol propane ethoxylate tetraacrylate or dipentaerythritol ethoxylate hexaacrylate.

Among them, a polyacrylate type polymer having ethylene glycol units is particularly preferred from the viewpoint of the electrical conductivity of lithium ions.

In the present invention, as the acrylic polymer, it is possible to employ a copolymer of the above monomer component with another monomer component. Namely, as a monomer component, in addition to the above monomer, a monomer having another structure may be present for the polymerization. Especially when a monomer having an unsaturated double bond such as a methacryloyl group, a vinyl group or an allyl group is present, the strength and liquid-maintaining property of the electrolyte may be improved. As such a monomer, a compound such as methyl methacrylate, methacrylamide, butadiene, acrylonitrile, styrene, vinyl acetate or vinyl chloride may be employed.

The ratio of the monomer having an acryloyl group to the total monomers, in a case of using an acrylic polymer, is not particularly limited, but it is usually at least 50 wt%, preferably at least 70 wt%, particularly preferably at least 80 wt%. It is advantageous that the above ratio is high, since the polymerization rate is thereby high, and the productivity of the electrolyte can be increased.

The crosslinkable polymer has crosslinkages. The crosslinkages may be produced by a crosslinking reaction of polymers by means of a crosslinking agent. Otherwise, they may be produced by using as a material for a polymer a monomer having a plurality of reactive points (hereinafter sometimes referred to as "a polyfunctional monomer"). Preferred is the latter method.

In a case where a crosslinkable polymer is produced by the latter method, as starting materials, in addition to the polyfunctional monomer, a monomer having one reactive point (hereinafter sometimes referred to as "a monofunctional monomer") may be used in combination. When a polyfunctional monomer and a monofunctional monomer are used in combination, the equivalent ratio of the functional groups of the polyfunctional monomer is usually at least 10%, preferably at least 15%, more preferably at least 20%.

The most preferred method for producing a crosslinkable polymer is a method wherein a polyfunctional monomer having a plurality of acryloyl groups is polymerized, if necessary, together with a monofunctional monomer having one acryloyl group.

The content of the polymer to be contained in the electrolyte is usually at most 80 wt%, preferably at most 50 wt%, more preferably at most 20 wt%, based on the total weight of the electrolyte. If the polymer content is too large, the ion conductivity is likely to decrease due to a decrease of the concentration of the non-aqueous electrolytic solution, whereby the cell characteristics such as the rate characteristics, tend to decrease. On the other hand, if the proportion of the polymer is too small, formation of a gel tends to be difficult, whereby the non-aqueous solvent-maintaining property tends to decrease, whereby not only fluidity and liquid leakage may result, but also safety of the cell may not be secured. Accordingly, the content of the polymer in the electrolyte is usually at least 0.1 wt%, preferably at least 1 wt%, more preferably at least 2 wt%, most preferably at least 5 wt%.

The proportion of the polymer to the non-aqueous solvent may suitably be selected depending upon the molecular weight of the polymer, but it is usually at least 0.1 wt%, preferably at least 1 wt% and usually at most 50 wt%, preferably at most 30 wt%. If the proportion of the polymer is too small, formation of a gel tends to be difficult, whereby the non-aqueous electrolytic solution-maintaining property may decrease, and problems of fluidity and liquid leakage tend to result. If the proportion of the polymer is too large, the viscosity tends to be too high, whereby handling tends to be difficult, and due to a decrease of the concentration of the non-aqueous electrolytic solution, the ion conductivity tends to decrease, and the cell characteristics such as the rate characteristics tend to deteriorate.

In the present invention, it is preferred to employ a method wherein the electrolyte in such a state that a monomer as a material for a polymer is contained, is filled into void spaces of a spacer (details will be described hereinafter), followed by polymerization of the monomer to form a polymer.

As a method for polymerizing such monomers, a method by means of heat, ultraviolet rays, electron beams, etc., may, for example, be mentioned. However, in the present invention, it is preferred to polymerize the monomers by heating or by ultraviolet irradiation from the viewpoint. of efficiency in the production. In the case of polymerization by heat, in order to let the reaction proceed effectively, a polymerization initiator reactive by heat may be incorporated in the electrolyte to be impregnated. As a useful heat polymerization initiator, an azo compound such as azobisisobutyronitrile or dimethyl 2,2'-azobisisobutylate, or a peroxide such as benzoyl peroxide, cumene hydroperoxide or t-butylperoxy-2-ethyl hexanoate may, for example, be used. They may be used alone or in combination taking into consideration the reactivity, the polarity, the safety, etc. In order to obtain the polymer, it is preferred to react usually at least 30%, preferably at least 40%, more preferably at least 50%, among all functional groups of the monomer.

The above electrolyte is preferably impregnated in the positive electrode, the negative electrode and the spacer which may be disposed between the positive and negative electrodes, in order to improve the ion conductivity by lithium ions.

The spacer is usually used to prevent short-circuiting between the positive electrode and the negative electrode. The spacer is usually made of a porous film. The material to be used for the spacer may, for example, be a porous film of a polyolefin such as polyethylene or polypropylene, a polyolefin having a part or all of hydrogen atoms thereof substituted by fluorine atoms or a resin such as polyacrylonitrile or polyaramide. From the viewpoint of the chemical stability against the electrolyte or from the viewpoint of the stability against the voltage to be applied, it is preferably a polyolefin or a fluorinated polyolefin. Specifically, polyethylene or polypropylene, or one having a part or all of hydrogen atoms thereof substituted by fluorine atoms, may be mentioned. Among them, particularly preferred is a polyolefin such as polyethylene or polypropylene, a polytetrafluoroethylene (PTFE) or a polyvinylidene fluoride, most preferably a polyolefin such as polyethylene or polypropylene. Of course, a copolymer or mixture thereof may be used.

The number average molecular weight of the resin to be used as the material for the spacer is usually at least 10000, preferably at least 100000 and usually at most 10000000, preferably at most 3000000. If the molecular weight is too small, the mechanical strength tends to be inadequate, whereby short-circuiting of the electrodes tends to result. On the other hand, if the molecular weight is too large, impregnation of the electrolyte into pores of the porous film tends to be difficult, whereby the production efficiency of the cell tends to deteriorate, and the cell performance such as rate characteristics tend to deteriorate. Further, if the molecular weight is too large, it may happen that film formation tends to be difficult in the after-mentioned method of mixing a plasticizer, followed by stretching.

As mentioned above, the spacer is usually a porous film. As the porous film, a porous stretched film or a non-woven fabric may, for example, be mentioned. However, in the present invention, it is more preferably a stretched film produced by stretching. With the porous stretched film, the resistance in the film will be more uniform than the non-woven fabric, whereby local precipitation of lithium, i.e. precipitation of dendrite which causes short-circuiting between the electrodes, can be suppressed.

Stretching for a porous stretched film may be monoaxial or biaxial stretching, but it is preferred to use a biaxially stretched one. With a biaxially stretched one, the balance in the lengthwise and crosswise mechanical strength of the film will be good, whereby handling for the production of a cell will be easy.

The porosity of the spacer is usually at least 30%, preferably at least 35% and usually at most 80%, preferably at most 75%, more preferably at most 72%. If the porosity is too small, the membrane resistance tends to be large, and the rate characteristics tend to deteriorate. Particularly when it is used at a high rate, the capacity will be decrease. On the other hand, if the porosity is too large, the mechanical strength of the film tends to decrease, whereby short-circuiting is likely to result when the shape of the cell element is changed. In the present invention, the larger the porosity, the larger the effect for the liquid-maintaining property of the electrolyte by the use of a crosslinkable polymer, whereby the safety during the storage at a high temperature will be high.

The average pore diameter of pores present in the spacer is usually at most 0.2 μm, preferably at most 0.18 μm, more preferably at most 0.15 μm and usually at least 0.01 μm, preferably at least 0.07 μm. If the pore diameter is too large, short-circuiting is likely to result. On the other hand, if the pore diameter is too small, the membrane resistance tends to increase, and the cell performance such as rate characteristics tends to deteriorate. In the present invention, the larger the average pore diameter, the larger the effect for the liquid-maintaining property of the electrolyte by the use of a crosslinkable polymer, whereby the safety during the storage at a high temperature will be high.

The thickness of the spacer is usually at least 5 μm, preferably at least 7 μm and usually at most 50 μm, preferably at most 28 μm, more preferably at most 25 μm, most preferably at most 20 μm. If the film thickness is too small, self discharge due to a mild short-circuiting phenomenon is likely to take place, and if the film thickness is too large, not only the cell characteristics such as the rate characteristics tend to be inadequate, but also the volume energy density tends to be low. In the present invention, when a crosslinkable polymer is used in a case where the film thickness of the spacer is small, self discharge can effectively be prevented.

The spacer usually has a withstand voltage of at least 0.3 kV, preferably at least 0.5 kV. Here, "has a withstand voltage of XkV" means that when a voltage of at least XkV is applied with a spacer interposed, a current of at least 100 mA will not flow between the electrodes. If the withstand voltage is too low, when the resistance is partially increased

for some reason during charging of the cell, the temperature may consequently abnormally be increased. Further, it tends to be difficult to effectively prevent self discharge. From the practical viewpoint, the withstand voltage is usually at most 1000 kV, preferably at most 100 kV, more preferably at most 10 kV.

In order to effectively prevent short circuiting, the pin penetration strength when the spacer is locally pressed, is adjusted to be usually at least 200 gf, preferably at least 230 gf, more preferably at least 300 gf. However, it is not practical that the pin penetration strength is too high, and it is usually at most 2000 gf, preferably at most 1500 gf, more preferably at most 1000 gf.

Further, it is preferred to employ a spacer such that the strain formed when the spacer is pulled in a predetermined direction with a force of 0.1 kg/cm, will be at most 1%, whereby short circuiting can be prevented more effectively, and the positioning precision or the like of the spacer in a transportation step or a lamination step in the production of a cell can be easily maintained, so that the yield can be improved. However, it is practically difficult to obtain one having such a strain being so small, and it is usually at least 0.01%, preferably at least 0.1%.

The heat shrinkage at 100°C of the spacer is usually at most 10%, preferably at most 9%, more preferably at most 7%, in one direction. Here, "the heat shrinkage in one direction" means, for example in the case of a stretched film, the heat shrinkage in each of the stretched direction and the direction perpendicular thereto. If the heat shrinkage is too large, short circuiting at the electrode end portions tends to be more likely by e.g. heating during the production of a cell or storage in a high temperature environment. In a case where a biaxially stretched film is used as the stretched film, it is preferred to adjust the heat shrinkages in both stretching directions to be close to each other, to facilitate the design and production. In such a case, the difference between the heat shrinkages in both stretching directions is adjusted to be usually within 7%, preferably within 5%, more preferably within 4.5%.

Further, the surface tension of the spacer is adjusted to be usually at least 40 dyne/cm, preferably at least 46 dyne/cm, particularly preferably at least 48 dyne/cm. As a result, the electrolyte can be sufficiently impregnated into pores in the porous film, and it becomes possible to realize improvement of the productivity and improvement of the rate characteristics. In order to obtain a film having such a surface tension, it is usually preferred to apply a surface-modification treatment such as corona discharge treatment, plasma treatment or fluorine gas treatment, to the spacer. However, it is difficult to obtain a film with a surface tension being so high, and the surface tension is usually at most 60 dyne/cm, preferably at most 58 dyne/cm.

The spacer can be produced, for example, as follows. A plasticizer as a heterogeneous dispersant is mixed and kneaded with a resin having a number average molecular weight of from about 10000 to 10000000, preferably from 100000 to 3000000, and then formed into a sheet. Further, via a step of extracting the plasticizer therefrom with a solvent and a step of stretching it at a prescribed stretching ratio in one or both of lengthwise and crosswise directions, a desired spacer can be obtained.

[3-3] Cell element and casing to accommodate the cell element

The lithium secondary cell of the present invention is made by accommodating a cell element in a casing. The cell element is usually formed by using as a base a unit cell element comprising positive and negative electrodes containing active materials as the main components, and an electrolyte. Such unit cell element may be formed in an elongated shape and wound into a rolled shape, or a plurality of such unit cell elements formed in a flat plate-shape may be stacked. Namely, the form of the cell element may, for example, be a flat plate stacked type wherein a plurality of flat plate-shaped unit cell elements are stacked, a flat plate-form rolled type wherein a unit cell element formed in an elongated shape is wound to form a flat plate shape, or a cylindrical rolled type wherein a unit cell element formed in an elongated shape is wound into a cylindrical shape. In the present invention, the form of the cell element is preferably a flat plate-form rolled type or a flat plate stacked type from the viewpoint of the productivity and feasibility for downsizing. In the case of a cell element of a flat plate-form rolled type or a flat plate stacked type, the casing to accommodate it will also be of a flat plate shape, but such a flat plate shape casing is particularly likely to bulge in its thickness direction at a high temperature, and therefore, the effect of using the above additive $\alpha$ is particularly large.

In a case where the cell element takes a form of a flat plate-form rolled type, the number of winding times of the unit cell element is usually at least 2, preferably at least 3, more preferably at least 4 and usually at most 20, preferably at most 15, more preferably at most 10. If the number of winding times is small, the capacity as the entire cell will be small. On the other hand, if the number of winding times is too large, such will be disadvantageous from the viewpoint of downsizing of the cell.

In a case where the cell element takes a form of a flat plate stacked type, the number of stacked layers of unit cell elements is usually at least 5 layers, preferably at least 8 layers, more preferably at least 10 layers and usually at most 50 layers, preferably at most 30 layers, more preferably at most 25 layers. If the number of stacked layers is small, the capacity as the entire cell will be small. On the other hand, if the number of stacked layers is too large, such will be disadvantageous from the viewpoint of downsizing of the cell.

Now, specific embodiments of the lithium secondary cell of the present invention will be described with reference to lithium secondary cells wherein a cell element of a flat plate stacked type is sealed in a variable shape casing. However, these are presented merely as exemplary, and the present invention is by no means restricted to such embodiments.

Fig. 1 is an exploded perspective view of the cell according to one embodiment of the present invention, Fig. 2 is a cross-sectional view of the essential part of the cell, Fig. 3 is a schematic perspective view of the cell element, and Fig. 4 is a perspective view of the cell.

This cell is one prepared in such a manner that a cell element 1 is accommodated in a recess of a sheathing member 3, then an insulating material 5 such as an epoxy resin or an acrylic resin is injected in the vicinity of terminal portions (tabs 4a and 4b) of the cell element 1, then the sheathing member 3 is covered with a sheathing member 2, followed by vacuum sealing to bond peripheral portions 2a and 3a of the sheathing members 2 and 3.

As illustrated in Fig. 1, the sheathing member 2 has a flat plate-shape. The sheathing member 3 is a shallow uncovered box-like member having a receiving portion 3b being a square box form recess, and the peripheral portion 3a flanged outwardly from the four peripheries of this receiving portion 3b.

As illustrated in Fig. 3, the cell element 1 comprises a plurality of unit cell elements stacked in the direction of the thickness. From the unit cell elements, the tabs 4a or 4b are led out. Tabs 4a from the respective positive electrodes are bundled one another, (namely, stacked one another), and a positive electrode lead 21 is bonded thereto to form a positive electrode terminal. Tabs 4b from the respective negative electrodes are also bundled, and a negative electrode lead 21 is bonded thereto to form a negative electrode terminal.

The cell element 1 is accommodated in the receiving portion 3b of the sheathing member 3, the insulating material 5 is injected to the vicinity of tabs 4a and 4b, and the side surface of the cell element in the vicinity of the positive electrode terminal and the negative electrode terminal is covered with the insulating material. Then, the sheathing member 2 is put thereon. A pair of leads 21 extending from the cell element 1, are led out to the outside through the mating face of the peripheral portions 2a and 3a on one side of the respective sheathing members 2 and 3. Then, the peripheral portions 2a and 3a of four peripheries of the sheathing members 2 and 3 are bonded to each other for sealing by a method such as thermocompression bonding or ultrasonic welding in a reduced pressure (preferably vacuum) atmosphere, whereby the cell element 1 is sealed in the sheathing members 2 and 3. Then, the insulating material 5 is subjected to curing treatment by e.g. heating, whereby the insulating material 5 is completely fixed in the vicinity of the terminals. Since the sheathing members are sealed before the insulating material is completely fixed, the shape of the cell is not likely to change at the time of the fixing. By filling the insulating material 5 in the vicinity of the terminal portions (tabs 4a and 4b), separation of the cell element due to an increase of the internal pressure of the sheathing member (casing) during the storage at a high temperature can effectively be prevented, and further, short circuiting is effectively prevented.

By the bonding of the peripheral portions 2a and 3a to each other, bonded portions 4A, 4F and 4G are formed. These bonded portions 4A, 4F and 4G flange outwardly from a packing portion 4B packing the cell element 1. Then, these bonded portions 4A, 4F and 4G are folded along the packing portion 4B.

Further, it is preferred to employ a method of fastening (fixing) these bonded portions to the side surface of the packing portion 4B by means of e.g. an adhesive or an adhesive tape. In the cell thus constituted, separation of the cell element due to an increase of the internal pressure of the sheathing member (casing) during the storage at a high temperature can effectively be prevented, and the strength and rigidity of the side surface of the cell can be improved. Of course, separation of the folded bonded portions from the packing portion can also be prevented. Further, since the strength and rigidity of the side surface of the cell are high, separation of the active material is prevented, even when the side surface receives a shock.

As the above-mentioned insulating material 5, a synthetic resin is preferred, and an epoxy resin, an acryl resin or a silicone resin may, for example, be mentioned. Among them, an epoxy resin or an acryl resin is preferred, since the curing time is short. Particularly, an acryl resin is most preferred, since it has a low possibility of giving an adverse affect to the cell performance. The insulating material is supplied to the vicinity of the terminal portions in an uncured state having fluidity, and will be fixed completely in the vicinity of the terminals by curing.

In Fig. 1, the insulating material is supplied independently to the positive electrode terminal portion and to the negative electrode terminal portion. However, in order to increase the safety during the storage at a high temperature, the entire side surface of the cell element ranging from the positive electrode terminal portion to the negative electrode terminal portion, may be covered.

In Fig. 1, the sheathing members 2 and 3 are separated members. However, in the present invention, the sheathing members 2 and 3 may be continuously unified as shown in Fig. 5. In Fig. 5, one side of the sheathing member 3 and one side of the sheathing member 2 are joined, whereby the sheathing member 2 forms a shape of cover plate foldable against the sheathing member 3. The recess of the receiving portion 3b is formed starting from one side where the sheathing members 2 and 3 are joined, and on this one side, the construction is the same as the bonded portions except that no bonded portion is formed.

Also in the case of Fig. 5, the insulating material is injected in the vicinity of tabs 4a and 4b of the cell element

1 after accommodating the cell element 1 in the receiving portion 3b.

In Figs. 1 and 5, the sheathing member 3 having the receiving portion 3b, and the sheathing member 2 being a flat plate are illustrated. However, in the present invention, as shown in Fig. 6, the cell element 1 may be packed by sheathing members 6 and 7, having shallow box-form receiving portions 6b and 7b, respectively, and having peripheral portions 6a and 7a flanged outwardly from the receiving portions 6b and 7b, respectively. In Fig. 6, the sheathing members 6 and 7 are continuously unified. However, these may be separated in the same manner as in Fig. 1.

In the constructions in Figs. 1, 5 and 6, the receiving portion for the cell element is preformed, and the cell element can be accommodated compactly, and the accommodation itself is easy.

In the above-mentioned description, the insulating material is injected to the vicinity of the terminals after the cell element has been accommodated in the receiving portion. However in this method, the insulating material is likely to deposit on or flow to the mating face of the peripheral portions or between the cell element and the sheathing material, whereby the bonding of the peripheral portions may be impaired, or the cell shape may not be as designed. Then, by accommodating the cell element in the receiving portion after supplying the insulating material to the vicinity of the terminals of the cell element, the above-mentioned problems can be avoided. Particularly, in the case of Fig. 6, the insulating material cannot be supplied to about the upper half of the cell element even if the insulating material is supplied after accommodation of the cell element, and it is preferred to use this production method. On the other hand, in this method, it is necessary to transport the cell element which is not easy to handle in such a state that the insulating material has been supplied, and to place it in the sheathing members, and accordingly, a due care is required in its handling in the production. In this respect, the first method may be preferred.

In the present invention, as shown in Fig. 7, a flat sheet-shaped sheathing member 8 may be folded along the centerline 8a to form two members, i.e. a first member 8A and a second member 8B, then the cell element 1 may be interposed between the first member 8A and the second member 8B, and as shown in Fig. 8, peripheral portions 8b of the first and second members 8A and 8B may be bonded to each other to seal in the cell element 1. Further, a method may also be mentioned wherein both ends of a film shaped sheathing member is bonded to each other to form a tube, the cell element is accommodated in the tube, and then the top and the bottom portions of the tube are bonded.

Also in these cases, the first member 8A and the second member 8B of the sheathing member 8 are put together to seal in the cell element 1 before or after supplying the insulating material to the vicinity of tabs 4a and 4b of the cell element 1. Further, bonded portions are preferably folded along the packing portion and fixed thereto.

In the step of covering of the side surface of the cell element in the vicinity of the terminal portions, it is particularly preferred to provide between the positive and negative electrodes, spacers larger than these, and to bond the protruded portions of these spacers one another.

Namely, in the cell element, for example as shown in Fig. 18, the spacers 13 slightly protrude from the positive electrodes 11 and the negative electrodes 12 to form the protruded portions 13a, whereby short circuiting between the positive electrodes 11 and the negative electrodes 12 is prevented. By fixing the protruded portions 13a one another with the insulating material, the cell element is restricted in the direction of lamination, whereby separation of the cell element due to an increase of the internal pressure of the sheathing member (casing) during the storage at a high temperature can be effectively prevented. Of course, the insulating material can be supplied over the entire side surface of the cell element, which is also preferred.

In order to inject the insulating material, as shown in Fig. 17, it is preferred to insert a nozzle 51 of an insulating material injecting device 50, inside the sheathing member 3, and to inject the insulating material on the side end surface of the cell element 1.

In this case, as shown in Figs. 14, 15 and 16, it is preferred to inject the insulating material at a plurality of portions such as both corner portions $R_1$ and $R_6$ of the side end surface having the tab 4a or 4b, as well as both sides $R_2$, $R_3$, $R_4$ and $R_5$ of the roots of the respective tabs 4a and 4b. The insulating material thus injected penetrates over the entire one side including the positive electrode terminal portion and the negative electrode terminal portion by an action of e.g. the capillary phenomenon. The injecting device 50 is provided with multiple (six) nozzles and can inject an insulating material to multiple portions at the same time.

Further, as shown in Fig. 16, when the insulating material is injected to both sides of the roots of tabs 4a and 4b, the injecting point (the center of injecting nozzle 51) is preferably within 2 mm from the tab 4a or 4b. When the insulating material is thus injected to both sides of the roots of the tabs 4a and 4b, not only the insulating material fixes the protruded portions 13a one another, but also in the same manner as in the case of Fig. 5, a construction can also be obtained wherein at least a part of the positive electrode terminal portion and the negative electrode terminal portion is covered with the insulating material 5.

In the above-mentioned construction, the bonded portions formed by bonding film-form sheathing members, are folded along the packing portion packing the cell element, and more preferably, they are folded from the root of the packing portion. In this case, the bonded portions may be folded at the root of the packing portion one time, or may be folded multiple times. When they are folded multiple times, it is preferred to fold the bonded portions so that the front edges of the bonded portions come between the bonded portions and the packing portion. Thus, the front edges

of the bonded portions are insulated from the external air, and intrusion of e.g. moisture or air from the front edges can be prevented.

As the adhesive useful for fixing the bonding portions to the packing portion, an epoxy adhesive, an acryl adhesive, a urethane adhesive, a hot melt adhesive or a synthetic rubber adhesive may, for example, be mentioned. Among these, a hot melt adhesive having a short curing time and being curable even under the environment of a low dew point to be used at the time of producing a non-aqueous type cell, is preferred.

A preferred construction of the unit cell element will be explained below.

Fig. 9 illustrates a preferred example of the unit cell element for the lithium secondary cell element. The unit cell element comprises a positive electrode comprising a positive electrode current collector 22 and a positive electrode material layer 23, a spacer 24 impregnated with an electrolyte, and a negative electrode comprising a negative electrode material layer 25 and a negative electrode current collector 26, laminated one another. In order to suppress precipitation of lithium dendrite, the negative electrode is made larger than the positive electrode. Further, in order to prevent short circuiting, the spacer 24 is made larger than the positive electrode and the negative electrode. By making the spacer larger than the positive and negative electrodes, as mentioned above, it is possible to fix the protruded portions of the spacers of the respective unit cell elements one another.

The cell element is formed by stacking a plurality of such unit cell elements, and in this stacking step, a unit cell element in the regular position (Fig. 9) having the positive electrode on the top side and the negative electrode on the bottom side, and a unit cell element in the reversed position (figure is omitted) having reversely the positive electrode on the bottom side and the negative electrode on the top side, are laminated alternately. Namely, these are stacked so that in the unit cell elements adjacent in the stacked direction, the same electrodes (namely, positive electrode and positive electrode, or negative electrode and negative electrode) face each other.

In this unit cell element, the positive electrode current collector 22 is provided with the positive electrode tab 4a extending therefrom, and the negative electrode current collector 26 is provided with the negative electrode tab 4b extending therefrom.

Instead of the unit cell element which comprises a positive electrode material layer, a spacer and a negative electrode material layer laminated between a positive electrode current collector and a negative electrode current collector as illustrated in Fig. 9, the unit cell element may be such that, as illustrated in Fig. 10, on both sides of a positive electrode current collector 15a or a negative electrode current collector 15b as a core member, positive electrode material layers 11a or negative electrode material layers 12a are laminated to form a positive electrode 11 or a negative electrode 12, and then such a positive electrode 11 and such a negative electrode 12 are laminated alternately via a spacer 13 impregnated with an electrolyte as illustrated in Fig. 11 to form a unit cell element. In this case, the combination of a pair of the positive electrode 11 and the negative electrode 12 (strictly speaking, from the center in the direction of the thickness of the current collector 15a of the positive electrode 11, to the center of the direction of the thickness of the current collector 15b of the negative electrode 12) corresponds to a unit cell element.

The planar shape of the electrode is optional, and may be quadrangular, circular, polygonal or the like.

As illustrated in Figs. 9 and 10, the current collectors 22 and 26, or 15a and 15b, are usually provided with tabs 4a and 4b for connection to leads. When the electrode is quadrangular, usually as illustrated in Fig. 3, the tab 4a protruding from the positive electrode current collector, is formed in the vicinity of one end of one side of the electrode, and, the tab 4b of the negative electrode current collector is formed in the vicinity of the other end.

Stacking a plurality of the unit cell elements is effective to increase the capacity of the cell, and in this method, the tabs 4a and the tabs 4b from the respective unit cell elements are usually respectively bonded in the direction of the thickness to form terminal portions of the positive electrode and the negative electrode. As a result, it becomes possible to obtain a cell element 1 having a large capacity.

To the tabs 4a and 4b, leads 21 made of a metal foil are bonded as illustrated in Fig. 2. As a result, the leads 21 and the positive electrode and the negative electrode of the cell are connected electrically. Bonding between the tabs 4a one another, tabs 4b one another, and between the tabs 4a and the lead 21, or the tabs 4b and the lead 21 can be performed by resistance welding such as spot welding, ultrasonic welding or laser welding.

For at least one, preferably both of the above-mentioned positive and negative electrode leads 21, an annealed metal is preferably used. As a result, a cell excellent not only in the strength but also in the durability against folding, can be obtained.

As a type of the metal to be used for the leads, aluminum, copper, nickel or SUS, may, usually, be used. A material preferred for the positive electrode lead is aluminum. A material preferred for the negative electrode lead is copper.

The thickness of a lead 21 is usually at least 1 μm, preferably at least 10 μm, more preferably at least 20 μm, most preferably at least 40 μm. If it is too thin, the mechanical strength such as the tensile strength tends to be insufficient. Further, the thickness of the lead is usually at most 1,000 μm, preferably at most 500 μm, more preferably at most 100 μm. If it is too thick, the durability against folding tends to deteriorate, and sealing of the cell element by the casing tends to be difficult. The advantage obtainable by using, for the lead, an annealed metal as described hereinafter,

becomes more distinct as the thickness of the lead becomes thicker.

The width of the lead is usually at least 1 mm and at most 20 mm, particularly, at least 1 mm and at most about 10 mm, and the length of the lead exposed to the outside is usually at least 1 mm and at most about 50 mm.

In the lithium secondary cell of the present invention, the casing to accommodate the cell element has a variable shape. The variable shape casing has merits in that not only cells of various shapes can easily be prepared, but also the volume energy density and the weight energy density of the cell can be improved, as the casing itself is thin and light in weight. On the other hand, it lacks in rigidity as compared with a metal can, whereby bulging of the casing is likely to result during the storage at a high temperature. Accordingly, when a variable shape casing is employed, the effect of incorporating the above additive $\alpha$ in the cell element will be distinctly observed.

The casing having a variable shape means a casing having flexibility. Specifically, it means a casing having flexibility, bending properties, etc. More specifically, it means a casing which can be manually flexibly bent, so that a flat-plate like casing may easily be changed into a shape such as a letter L shape or letter S shape.

As the material for the variable shape casing, a metal such as aluminum, nickel-plated iron or copper or a synthetic resin may, for example, be employed. Preferred is a laminated film provided with a gas barrier layer and a resin layer, particularly, a laminated film having resin layers formed on both sides of a gas barrier layer. Such a laminated film not only has high gas barrier performance, but also has high shape-variability and thinness. As a result, reducing the thickness and weight of the sheathing material becomes possible, and the capacity of the cell as a whole can be improved.

As the material for the gas barrier layer employed in the laminated film, a metal such as aluminum, iron, copper, nickel, titanium, molybdenum or gold, an alloy such as stainless steel or hastelloy, or a metal oxide such as silicon dioxide or aluminum oxide, may be used. Preferred is aluminum which is light in weight and excellent in workability.

As the resin to be used for the resin layer, various types of sheet-form synthetic resins such as thermoplastics, thermoplastic elastomers, thermosetting resins or plastic alloys may be used. These resins include ones mixed with a bulking agent such as a filler.

As a specific construction of the laminated film, as illustrated in Fig. 12(A), one having a gas barrier layer 40 and a resin layer 41 laminated, may be used. Further, a more preferred laminated film is a three layer laminate, as illustrated in Fig. 12(B), wherein a synthetic resin layer 41 functioning as an external protection layer, is laminated on the external surface of a gas barrier layer 40, and a synthetic resin layer 42 functioning as an internal protection layer for preventing a corrosion caused by the electrolyte and preventing the contact of the gas barrier layer with the cell element, and protecting the gas barrier layer, is laminated on the inner surface of the gas barrier layer 40 to form this three layer laminate.

In this case, the resin used for the external protection layer is preferably a resin excellent in chemical resistance or in mechanical strength, such as polyethylene, polypropylene, modified polyolefin, ionomer, non-crystalline polyolefin, polyethylene terephthalate or polyamide.

For the internal protection layer, a synthetic resin having chemical resistance is used. For example, polyethylene, polypropylene, modified polyolefin, ionomer or an ethylene-vinyl acetate copolymer may be used.

Further, the laminated film is preferred since, as illustrated in Fig. 13, it is also possible to provide an adhesive layer 43 between the gas barrier layer 40 and the synthetic resin layer 41 which is for forming a protection layer, and between the gas barrier layer 40 and the synthetic resin layer 42 which is for forming a corrosion resisting layer. Further, in order to bond the sheathing members to each other, an adhesive layer made of a resin such as polyethylene or polypropylene, which can be deposited on the innermost surface of the composite member, may be provided. The casing is formed by employing any of these metals, synthetic resins or composite members. The casing may be formed by fusion bonding the peripheral area of a film-form member, and may also be formed by drawing a sheet-form member by vacuum forming, pressure forming, press molding or the like. Further, it may also be formed by injection molding of the synthetic resin. When the injection molding is used, the gas barrier layer is usually formed by e.g. sputtering.

The receiving portion, which is a recess of the sheathing member to be used for the variable shape casing, can be formed by e.g. drawing. The sheathing member is preferably one having a film form, since it is easy to process.

The thickness of the variable shape casing is usually at least 0.01 μm, preferably at least 0.02 μm, more preferably at least 0.05 μm, and usually at most 1 mm, preferably at most 0.5 mm, more preferably at most 0.3 mm, still more preferably at most 0.2 mm, most preferably at most 0.15 mm. The thinner the thickness, the smaller and the lighter the cell can be made. However, if it is too thin, not only the possible danger of rupture due to an increase of the internal pressure of the casing during the storage at a high temperature increases, but also it tends to be difficult to impart sufficient rigidity, or the sealing performance is likely to deteriorate.

The thickness of the entire lithium secondary cell having the cell element accommodated in the casing, is usually at most 5 mm, preferably at most 4.5 mm, more preferably at most 4 mm. The present invention is particularly effective to such a thin type lithium secondary cell. However, the cell having too thin thickness is likely to have too small a capacity, or is difficult to produce. Accordingly, it is usually at least 0.5 mm, preferably at least 1 mm, more

preferably at least 2 mm.

Further, in order to facilitate e.g. mounting of the cell on an instrument, it is also possible that a cell element is sealed in a variable shape casing and formed into a preferred shape, and then, as the case requires, a plurality of such lithium secondary cells may be accommodated in an outer casing having rigidity.

[4] Uses of the lithium secondary cell

Electrical equipments, for which the lithium secondary cell of the present invention is useful as a power source, include, for example, a notebook personal computer, a tablet personal computer, a portable information terminal (Personal Digital Assistants, PDA), a eBook player, a mobile phone, a codeless phone extension, a pager, a handy terminal, a portable facsimile, a portable copying machine, a portable printer, a headphone stereo, a video movie, a liquid crystal TV, a handy cleaner, a portable CD, a mini disk, an electric shaver, a transceiver, an electronic databook, an electric calculator, a memory card, a portable tape recorder, a radio, a backup power source, a motor, a luminaire, a toy, a game machine, a load conditioner, a clock, a strobe, a camera, and medical equipments (a pace maker, a hearing aid, a massager, etc.).

EXAMPLES

Now, the present invention will be described in further detail with reference to Examples. However, the present invention is by no means restricted to such specific Examples, and can be optionally modified and embodied within the range of not changing the gist. Here, "parts" in the composition means "parts by weight". A. Types of the sulfur compounds and influences of their addition or absence

Reference Example 1

A lithium secondary cell containing dimethyl sulfoxide in an electrolyte was prepared as follows.

Production of positive electrode

A positive electrode coating material was prepared to have the following composition. Here, the specific surface area of the lithium-nickel compound oxide ($LiNi_{0.82}Co_{0.15}Al_{0.03}O_2$) was adjusted to be 0.38 $m^2/g$ by pulverization and classification after the synthesis. Further, as the lithium-cobalt compound oxide ($LiCoO_2$), one having a specific surface area of 0.50 $m^2/g$ was employed.

Composition of the positive electrode coating material

- Lithium-cobalt compound oxide (LiCoO2) 27 parts
- $LiNi_{0.82}Co_{0.15}Al_{0.03}O_2$ 63 parts
- Acetylene black 5 parts
- Polyvinylidene fluoride 5 parts
- N-methyl-2-pyrrolidone 80 parts

The above materials were kneaded for 2 hours by a planetary mixer type kneader to obtain a positive electrode coating material. Then, the above positive electrode coating material was coated on an aluminum current collector substrate having a thickness of 15 μm by extrusion type die coating, and dried to form a porous film having an active material fixed on the current collector by a binder. Then, an electrode sheet was produced by compaction treatment using a roll press (calender). Thereafter, from the electrode sheet, an electrode was cut out to obtain a positive electrode. The weight of the positive electrode active material was 10 $mg/cm^2$.

Production of negative electrode

A negative electrode coating material was prepared to have the following composition.

Composition of the negative electrode coating material

- Graphite (particle diameter: 15 μm) 90 parts
- Polyvinylidene fluoride 10 parts
- N-methyl-2-pyrrolidone 100 parts

The above materials were kneaded for 2 hours by a planetary mixer type kneader to obtain a negative' electrode coating material. Then, the above negative electrode coating material was coated on a copper current collector substrate having a thickness of 20 μm by extrusion type die coating, and dried to form a porous film having an active material fixed on the current collector by a binder. Then, an electrode sheet was produced by compaction treatment using a roll press (calender). Thereafter, from the electrode sheet, an electrode was cut out to obtain a negative electrode.

Ratio of positive and negative material layers

In the above example for the production of the positive and negative electrodes, the thicknesses of the positive and negative material layers were adjusted so that (charging capacity of the positive electrode)/(charging capacity of the negative electrode) = 0.93. Here, the charging capacity of the negative electrode was based on the capacity per unit weight of the negative electrode (mAh/g) when it was charged from 1.5V to 3 mV using Li as the counter electrode.

Production of electrolyte precursor solution

The following composition was mixed, stirred and dissolved to produce an electrolyte precursor solution.

Composition of the electrolyte precursor solution

- Electrolytic solution 925 parts
  Mixed solution of ethylene carbonate and propylene carbonate (volume ratio of ethylene carbonate : propylene carbonate = 1 : 1) containing 1M concentration of $LiPF_6$
- Tetraethylene glycol diacrylate 44 parts
- Polyethylene oxide triacrylate 22 parts
- Dimethyl sulfoxide 9.3 parts (*)
- Polymerization initiator 2 parts
- Additive (succinic anhydride) 9 parts

Production of lithium secondary cell

The positive electrode and the negative electrode prepared as described above, were coated with the electrolyte precursor solution. Separately, a polymer porous film (spacer) impregnated with the electrolyte precursor solution, was prepared. This film was inserted between the positive electrode and the negative electrode, followed by heating at 90°C for 10 minutes to polymerize tetraethylene glycol diacrylate and polyethylene oxide triacrylate in the electrolyte precursor solution and thereby to produce a flat plate-shaped unit cell element which had a positive electrode and a negative electrode each containing an active material and a binder and formed on a current collector and which had a non-fluidized electrolyte between the positive electrode and the negative electrode.

Leads to take out electric currents, were connected to the terminals of the positive electrode current collector and the negative electrode current collector of the above unit cell element. The cell element thus obtained was charged with 0.34 $mA/cm^2$ to a cell voltage of 4.2V. Thereafter, the cell element was accommodated in a pouched casing formed by facing laminated films each provided with resin layers on both sides of an aluminum film, and the laminated films were sealed by vacuum sealing to obtain a flat plate-shaped lithium secondary cell.

Bulging test 1 for the lithium secondary cell during the storage at a high temperature

For a bulging test of the lithium secondary cell during the storage at a high temperature, the lithium secondary

*: The dimethyl sulfoxide was contained in a proportion of 1.0 part to the electrolytic solution.

cell was stored at 90°C for 4 hours, whereupon the bulging degree of the laminated films was observed by a naked eye and relatively evaluated by four ranks of "nil", "small", "medium" and "large". The evaluation results are shown in Table 3.

Measurement of initial capacity of cell

The initial capacity of the lithium secondary cell was obtained in such a manner that a sample charged to a cell voltage of 4.2V was discharged to a cell voltage of 3.0V at 0.34 $mA/cm^2$, whereby the discharge capacity was obtained.

Here, the discharge capacity obtained by the lithium secondary cell of Reference Example 1 was rated to be 100, and the discharge capacities obtained by the above method, of the lithium secondary cells of other Examples and Comparative Examples, were represented by relative values to the above-mentioned discharge capacity of 100. The evaluation results are shown in Table 3.

Example 1

A lithium secondary cell was prepared in the same manner as in Reference Example 1 except that in Reference Example 1, dimethyl sulfoxide in the composition of the electrolyte precursor solution was changed to tetramethylene sulfoxide. The lithium secondary cell thus obtained was evaluated by "Bulging test 1 of the lithium secondary cell during the storage at a high temperature" and "Measurement of initial capacity of cell". The evaluation results are shown in Table 3.

Example 2

A lithium secondary cell was prepared in the same manner as in Reference Example 1 except that in Reference Example 1, dimethyl sulfoxide in the composition of the electrolyte precursor solution was changed to dimethyl sulfite. The lithium secondary cell thus obtained was evaluated by "Bulging test 1 of the lithium secondary cell during the storage at a high temperature" and "Measurement of initial capacity of cell". The evaluation results are shown in Table 3.

Example 3

A lithium secondary cell was prepared in the same manner as in Reference Example 1 except that in Reference Example 1, dimethyl sulfoxide in the composition of the electrolyte precursor solution was changed to ethylene sulfite. The lithium secondary cell thus obtained was evaluated by "Bulging test 1 of the lithium secondary cell during the storage at a high temperature" and "Measurement of initial capacity of cell". The evaluation results are shown in Table 3.

Example 4

A lithium secondary cell was prepared in the same manner as in Reference Example 1 except that in Reference Example 1, dimethyl sulfoxide in the composition of the electrolyte precursor solution was changed to dimethyl sulfone. The lithium secondary cell thus obtained was evaluated by "Bulging test of the lithium secondary cell during the storage at a high temperature" and "Measurement of initial capacity of cell". The evaluation results are shown in Table 3.

Example 5

A lithium secondary cell was prepared in the same manner as in Reference Example 1 except that in Reference Example 1, dimethyl sulfoxide in the composition of the electrolyte precursor solution was changed to sulfolane. The lithium secondary cell thus obtained was evaluated by "Bulging test 1 of the lithium secondary cell during the storage at a high temperature" and "Measurement of initial capacity of cell". The evaluation results are shown in Table 3.

Example 6

A lithium secondary cell was prepared in the same manner as in Reference Example 1 except that in Reference Example 1, dimethyl sulfoxide in the composition of the electrolyte precursor solution was changed to methyl methane sulfonate. The lithium secondary cell thus obtained was evaluated by "Bulging test 1 of the lithium secondary cell during the storage at a high temperature" and "Measurement of initial capacity of cell". The evaluation results are shown in Table 3.

Example 7

A lithium secondary cell was prepared in the same manner as in Reference Example 1 except that in Reference Example 1, dimethyl sulfoxide in the composition of the electrolyte precursor solution, was changed to 1,3-propane sultone. The lithium secondary cell thus obtained was evaluated by "Bulging test 1 of the lithium secondary cell during the storage at a high temperature" and "Measurement of initial capacity of cell". The evaluation results are shown in Table 3.

Example 8

A lithium secondary cell was prepared in the same manner as in Reference Example 1 except that in Reference Example 1, dimethyl sulfoxide in the composition of the electrolyte precursor solution, was changed to diethyl sulfate. The lithium secondary cell thus obtained was evaluated by "Bulging test 1 of the lithium secondary cell during the storage at a high temperature" and "Measurement of initial capacity of cell". The evaluation results are shown in Table 3.

Example 9

A lithium secondary cell was prepared in the same manner as in Reference Example 1 except that in Reference Example 1, dimethyl sulfoxide in the composition of the electrolyte precursor solution, was changed to ethylene glycol sulfuric acid ester. The lithium secondary cell thus obtained was evaluated by "Bulging test 1 of the lithium secondary cell during the storage at a high temperature" and "Measurement of initial capacity of cell". The evaluation results are shown in Table 3.

Comparative Example 1

A lithium secondary cell was prepared in the same manner as in Reference Example 1 except that in Reference Example 1, dimethyl sulfoxide in the composition of the electrolyte precursor solution, was not added. The lithium secondary cell thus obtained was evaluated by "Bulging test 1 of the lithium secondary cell during the storage at a high temperature" and "Measurement of initial capacity of cell". The evaluation results are shown in Table 3.

Comparative Example 2

A lithium secondary cell was prepared in the same manner as in Reference Example 1 except that in Reference Example 1, dimethyl sulfoxide in the composition of the electrolyte precursor solution, was changed to diphenyl sulfide. The lithium secondary cell thus obtained was evaluated by "Bulging test 1 of the lithium secondary cell during the storage at a high temperature" and "Measurement of initial capacity of cell". The evaluation results are shown in Table 3.

Comparative Example 3

A lithium secondary cell was prepared in the same manner as in Reference Example 1 except that in Reference Example 1, dimethyl sulfoxide in the composition of the electrolyte precursor solution, was changed to diphenyl' sulfide, and the amount was changed to 47 parts. The lithium secondary cell thus obtained was evaluated by "Bulging test 1 of the lithium secondary cell during the storage at a high temperature" and "Measurement of initial capacity of cell". The evaluation results are shown in Table 3.

Table 3

| | Additive (sulfur compound) | Amount (amount to the electrolytic solution) | Bulging of the lithium secondary cell during the storage at a high temperature (*1) | Initial capacity (relative value) |
|---|---|---|---|---|
| Ref. Ex. 1 | Dimethyl sulfoxide | 1.0 part | Medium | 100 |
| Ex. 1 | Tetramethylene sulfoxide | 1.0 part | Medium | 101 |

*1: Evaluation results in "Bulging test 1 of the lithium secondary cell during the storage at a high temperature" are shown. The bulging degree as observed by a naked eye was classified into "large", "medium", "small" and "nil".

Table 3 (continued)

| | Additive (sulfur compound) | Amount (amount to the electrolytic solution) | Bulging of the lithium secondary cell during the storage at a high temperature (*1) | Initial capacity (relative value) |
|---|---|---|---|---|
| Ex. 2 | Dimethyl sulfite | 1.0 part | Small | 101 |
| Ex. 3 | Ethylene sulfite | 1.0 part | Medium | 101 |
| Ex. 4 | Dimethyl sulfone | 1.0 part | Small | 102 |
| Ex. 5 | Sulfolane | 1.0 part | Small | 101 |
| Ex. 6 | Methyl methane sulfonate | 1.0 part | Small | 102 |
| Ex. 7 | 1,3-propane sultone | 1.0 part | Medium | 101 |
| Ex. 8 | Diethyl sulfate | 1.0 part | Medium | 100 |
| Ex. 9 | Ethylene glycol sulfuric acid ester | 1.0 part | Nil | 101 |
| Comp. Ex. 1 | Nil | - | Large | 100 |
| Comp. Ex. 2 | Diphenyl sulfide | 1.0 part | Large | 101 |
| Comp. Ex. 3 | Diphenyl sulfide | 5.0 parts | Large | 100 |

*1: Evaluation results in "Bulging test 1 of the lithium secondary cell during the storage at a high temperature" are shown. The bulging degree as observed by a naked eye was classified into "large", "medium", "small" and "nil".

The following is evident from Table 3.

Firstly, from the results of Reference Example 1, Examples 1 to 9 and Comparative Example 1, it is evident that in a case where no sulfur compound is contained in the electrolytic solution, bulging of the lithium secondary cell during the storage at a high temperature becomes "large". On the other hand, by incorporating a sulfur compound having at least one double bond between sulfur and oxygen in the electrolytic solution, it is possible to suppress bulging of the lithium secondary cell during the storage at a high temperature to a level of "medium", "small" or "nil". Namely, it is evident that in such a lithium secondary cell system, a sulfur compound having at least one double bond between sulfur and oxygen can be an additive $\alpha$.

Secondly, from the results of Comparative Examples 2 and 3, it is evident that even if a sulfur is contained in its molecule, a compound having no double bond formed between sulfur and oxygen, is incapable of suppressing bulging of the lithium secondary cell during the storage at a high temperature. Namely, it is evident that in such a lithium secondary cell system, diphenyl sulfide cannot be an additive $\alpha$.

Thirdly, from a comparison of the results of Reference Example 1 to Example 4 and a comparison of the results of Example 1 to Example 5, it is evident that by increasing the number of double bonds between sulfur and oxygen in the molecule from 1 to 2, bulging of the lithium secondary cell during the storage at a high temperature can further be reduced.

Fourthly, from a comparison of the results of Reference Example 1 to Example 2, and the results of Example 5 to Example 9, respectively, it is evident that by further bonding oxygen to sulfur which forms a double bond between it and oxygen, bulging of the lithium secondary cell during the storage at a high temperature can further be reduced.

Fifthly, from the results of the measurement of the initial cell capacities in Reference Example 1, Examples 2 to 9 and Comparative Example 1 to 3, it is evident that even if a sulfur compound having at least one double bond between sulfur and oxygen, is incorporated in a lithium secondary cell, the basic characteristics as a lithium secondary cell will not be deteriorated.

Bulging test 2 of the lithium secondary cell during the storage at a high temperature

With respect to the respective lithium secondary cells of Reference Example 1, Examples 1 to 9 and Comparative Example 1, to determine the marginal ability to prevent bulging of the lithium secondary cell during the storage at a high temperature by incorporating an additive $\alpha$ in the cell element, two (n=2) or three (n=3) cells were prepared for each of the respective lithium secondary cells, and such lithium secondary cells were stored at 90°C for 24 hours.

Bulging of each lithium secondary cell after the storage at a high temperature was evaluated as follows.

Namely, in the laminated film as the sheathing member of the lithium secondary cell, the portion where bulging was observed, was marked, and then the lithium secondary cell was disassembled. The laminated film obtained by the disassembling was separated into the marked portion and the other portion. Then, the weight of the laminated film at the portion where the bulging was observed, was divided by the weight of the entire laminated film to obtain the weight ratio of the bulged portion to the entirety. And, the density of the laminated film is deemed to be constant, and accordingly, this weight ratio was taken as an area ratio representing the area of the bulged portion to the entire area of the laminated film.

In Table 4, the values for ΔEadd(AN) of the additives (Reference Example 1 and Examples 1 to 9) and the value for ΔEsol(AN) of the non-aqueous solvent (Comparative Example 1), and the values for the above-mentioned area ratios of the bulged portions of the lithium secondary cells, are shown. Further, in Fig. 19, the relation between the values for ΔEadd(AN) of the additives (Reference Example 1 and Examples 1 to 9) and ΔEsol(AN) of the non-aqueous solvent (Comparative Example 1), and the area ratios of the bulged portions, is shown by a graph. Here, in Table 4 and Fig. 19, as ΔEsol(AN), one of ethylene carbonate was used which had a smaller value of ΔEsol(AN) among ethylene carbonate (ΔEsol(AN) = 2.37) and propylene carbonate (ΔEsol(AN) = 2.39) used as the solvents.

Table 4

| | | ΔEsol(AN), ΔEadd(AN)/eV | Relative value of bulged area (n=2 or 3) | | | |
|---|---|---|---|---|---|---|
| | | | 1 | 2 | 3 | ave. |
| Ref. Ex. 1 | Dimethyl sulfoxide | 3.230 | 0.253 | 0.263 | 0.249 | 0.255 |
| Ex. 2 | Tetramethylene sulfoxide | 1.699 | 0.252 | 0.253 | 0.251 | 0.252 |
| Ex. 3 | Dimethyl sulfite | 1.854 | 0.266 | 0.243 | - | 0.255 |
| Ex. 4 | Ethylene sulfite | 2.012 | 0.260 | 0.271 | 0.250 | 0.261 |
| Ex. 5 | Dimethyl sulfone | 1.365 | 0.145 | 0.121 | 0.158 | 0.141 |
| Ex. 6 | Sulfolane | 1.482 | 0.207 | 0.172 | 0.226 | 0.201 |
| Ex. 7 | Methyl methane sulfonate | 0.249 | 0.092 | 0.089 | 0.092 | 0.091 |
| Ex. 8 | Propane sultone | -0.172 | 0.076 | 0.056 | 0.081 | 0.071 |
| Ex. 9 | Dimethyl sulfate | 2.038 | 0.237 | 0.239 | 0.226 | 0.234 |
| Ex. 10 | Ethylene glycol sulfuric acid ester | -0.585 | 0.107 | 0.122 | 0.083 | 0.104 |
| Comp. Ex. 1 | Ethylene carbonate (EC) | 2.370 | 0.182 | 0.255 | 0.174 | 0.204 |

In Fig. 19, n=1, 2 and 3 of the relative values of bulged areas shown in Table 4, were plotted with the respective marks ×, Δ and ○, and a linearization line of average values for the respective relative values of bulged areas, is shown.

The following is evident from the linearization line of average values of n=1 to 3 in Fig. 19. Namely, it is evident

that using, as a standard, the value of ΔEsol(AN) of ethylene carbonate (EC) used as a non-aqueous solvent, in a case where an additive having a value of ΔEadd(AN) smaller than this standard, is incorporated in the electrolyte, the relative value of the area of the bulged portion tends to be small (the bulging tends to be small). Further, it is evident that in a case where an additive having a value larger than the above ΔEsol(AN), is incorporated in the electrolyte, the relative value of the area of the bulged portion tends to be large (the bulging tends to be large). Specifically, ΔEadd(AN) of dimethyl sulfoxide is 3.23 eV, which is larger than 2.37 eV of Δsol(AN) of EC. Accordingly, bulging of the lithium secondary cell (Reference Example 1) under a very severe high temperature storage condition of 90°C for 24 hours, becomes larger than the lithium secondary cell containing no additive (Comparative Example 1).

Further, in the results of the measurement by the above "Bulging test 1 of the lithium secondary cell during the storage at a high temperature" (hereinafter sometimes referred to as "Bulging test 1") the result of evaluation of bulging during the.storage at a high temperature of the lithium secondary cell containing dimethyl sulfoxide, was "medium" (see Table 3). Namely, the result of evaluation of bulging during the storage at a high temperature of the lithium secondary cell containing dimethyl sulfoxide was happen to be different between Bulging test 1 and "Bulging test 2 of the lithium secondary cell during the storage at a high temperature" (hereinafter sometimes referred to as "Bulging test 2"). The reason for such a result is that the high temperature storage test condition in Bulging test 1 is different from the high temperature storage test condition of Bulging test 2. Namely, against the high temperature storage condition (90°C for 4 hours) in Bulging test 1, the high temperature storage condition (90°C for 24 hours) in Bulging test 2 is very severe. This means that by the high temperature storage in Bulging test 2, the ultimate ability of the additive can be determined. Dimethyl sulfoxide has a double bond between sulfur and oxygen, and accordingly, in Bulging test 1 which is sufficient as an index for judging practical usefulness, bulging of the cell during the storage at a high temperature is suppressed. However, in Bulging test 2 which is an ultimate evaluation method for judging the presence or absence of bulging of the cell during the storage at a high temperature, bulging of the lithium secondary cell is observed. This result means that by using a sulfur compound whereby the value for ΔEadd(AN) and the value for ΔEsol(AN) of the non-aqueous solvent will be in the specified relation, among the prescribed sulfur compounds, bulging of the cell during the storage at a high temperature can certainly be suppressed. And, it may be said that the ultimate ability of an additive can be determined by Bulging test 2, and in the present invention, the significance to control the relation between the value for ΔEsol(AN) of the non-aqueous solvent and the value for ΔEadd(AN) of the additive, will be more apparent.

B. Study on the amount of the sulfur compound

Example 10

A lithium secondary cell was prepared in the same manner as in Example 4 except that in Example 4, the amount of dimethyl sulfone in the composition of the electrolyte precursor solution was changed to 4.7 parts. The lithium secondary cell thus obtained was evaluated by "Bulging test 1 of the lithium secondary cell during the storage at a high temperature" and "Measurement of initial capacity of cell". The evaluation results are shown in Table 5.

Example 11

A lithium secondary cell was prepared in the same manner as in Example 4 except that in Example 4, the amount of dimethyl sulfone in the composition of the electrolyte precursor solution was changed to 47 parts. The lithium secondary cell thus obtained was evaluated by "Bulging test 1 of the lithium secondary cell during the storage at a high temperature" and "Measurement of initial capacity of cell". The evaluation results are shown in Table 5.

Example 12

A lithium secondary cell was prepared in the same manner as in Example 4 except that in Example 4, the amount of dimethyl sulfone in the composition of the electrolyte precursor solution was changed to 94 parts. The lithium secondary cell thus obtained was evaluated by "Bulging test 1 of the lithium secondary cell during the storage at a high temperature" and "Measurement of initial capacity of cell". The evaluation results are shown in Table 5.

Table 5

| | Additive (sulfur compound) | Amount (amount to the electrolytic solution) | Bulging of the lithium secondary cell during the storage at a high temperature (*2) | Initial cell capacity (relative value) |
|---|---|---|---|---|
| Ex. 10 | Dimethyl sulfone | 0.5 part | Medium | 100 |
| Ex. 4 | Dimethyl sulfone | 1.0 part | Small | 102 |
| Ex. 11 | Dimethyl sulfone | 5.0 parts | Nil | 101 |
| Ex. 12 | Dimethyl sulfone | 10.0 parts | Nil | 100 |

*2: Indicates the evaluation results in "Bulging test 1 of the lithium secondary cell during the storage at a high temperature". As observed by a naked eye, the bulging degree was classified into "large", "medium", "small" and "nil".

In Table 4, data of Example 4 are also presented for a detailed study of the influence of the amount of dimethyl sulfone as the additive.

From the results in Table 4, it is evident that dimethyl sulfone which is a sulfur compound having at least one double bond between sulfur and oxygen in its molecule, functions as an additive $\alpha$ in this lithium secondary cell system. Particularly, it is evident that when dimethyl sulfone is incorporated in an amount of at least 5.0 parts to the electrolytic solution, bulging of the lithium secondary cell during the storage at a high temperature can completely be suppressed. Further, from the results of the measurement of the initial cell capacity, it is evident that at least up to the amount of 10 parts by weight, even if the amount of dimethyl sulfone is increased, the basic characteristics of the lithium secondary cell will not be deteriorated.

C. Influences of the positive electrode active material

Comparative Example 4

A lithium secondary cell was prepared in the same manner as in Reference Example 1 except that in Reference Example 1, as the positive electrode active material, a lithium-cobalt compound oxide ($LiCoO_2$) was used alone (in the composition of the positive electrode coating material, the lithium-cobalt compound oxide ($LiCoO_2$) was 90 parts) without using the lithium-nickel compound oxide ($LiNi_{0.82}Co_{0.15}Al_{0.03}O_2$), and no dimethyl sulfoxide was added. The lithium secondary cell thus obtained was evaluated by "Bulging test 1 of the lithium secondary cell during the storage at a high temperature" and "Measurement of initial capacity of cell". The evaluation results are shown in Table 6.

Table 6

| | Positive electrode active material | Bulging of the lithium secondary cell during the storage at a high temperature (*3) | Initial cell capacity (relative value) |
|---|---|---|---|
| Comp. Ex. 1 | $LiCoO_2$ $LiNi_{0.82}Co_{0.15}Al_{0.03}O_2$ | Large | 100 |
| Comp. Ex. 4 | $LiCoO_2$ | Nil | 82 |

*3: Indicates the evaluation results in "Bulging test 1 of the lithium secondary cell during the storage at a high temperature". As observed by a naked eye, the bulging degree was classified into "large", "medium", "small" and "nil".

In Table 6, data of Comparative Example 1 are also presented for a detailed study of the influences of the type of the positive electrode active material.

From the results in Table 6, it is evident that in the lithium secondary cell system of Comparative Examples 1 and 4, if the positive electrode active material is made to be the lithium-cobalt compound oxide ($LiCoO_2$) alone, even if no additive $\alpha$ is incorporated, bulging during the storage at a high temperature scarcely results as visually observed. Namely, it is evident that if a lithium-nickel compound oxide is incorporated to the positive electrode active material for the purpose of increasing the cell capacity, a problem of bulging of the variable shape casing during the storage at a high temperature will be more distinct.

Incidentally, the reason why the bulging of the lithium secondary cell during the storage at a high temperature

became "nil" in Comparative Example 4, is considered to be such that firstly, the lithium secondary cell system in Comparative Example 4 employs a polymer electrolyte and a high boiling point solvent, whereby the system has a stable composition against storage at a high temperature. Further, secondly, the time for the storage at a high temperature was relatively short at a level of 4 hours. The high temperature storage conditions of 90°C for 4 hours in Bulging test 1 are sufficient conditions when practical use of the lithium secondary cell is taken into consideration. However, they are not the ultimate high temperature storage conditions for judging the presence or absence of bulging of the lithium secondary cell during the storage at a high temperature, as for Bulging test 2. Therefore, even with the lithium secondary cell of Comparative Example 4, if Bulging test 2 is carried out to ultimately evaluate the presence or absence of bulging of the lithium secondary cell during the storage at a high temperature, it is expected that bulging of the lithium secondary cell will be observed. Accordingly, even with the lithium secondary cell of Comparative Example 4, if the additive $\alpha$ is incorporated to the cell element, and the non-aqueous solvent and the additive $\alpha$ are controlled to the specific relation, it is considered possible to certainly suppress bulging of the lithium secondary cell even under severer high temperature storage conditions.

D. Influences of the specific surface area of the positive electrode active material.

Example 13

A lithium secondary cell was prepared in the same manner as in Example 11 except that in Example 11, a lithium-nickel compound oxide ($LiNi_{0.82}Co_{0.15}Al_{0.03}O_2$) having a specific surface area of 0.60 $m^2/g$ was used. The lithium secondary cell thus obtained was evaluated by "Bulging test 1 of the lithium secondary cell during the storage at a high temperature" and "Measurement of initial capacity of cell". The evaluation results are shown in Table 7.

Example 14

A lithium secondary cell was prepared in the same manner as in Example 11 except that in Example 11, a lithium-nickel compound oxide ($LiNi_{0.82}Co_{0.15}Al_{0.03}O_2$) having a specific surface area of 0.74 $m^2/g$ was used. The lithium secondary cell thus obtained was evaluated by "Bulging test 1 of the lithium secondary cell during the storage at a high temperature" and "Measurement of initial capacity of cell". The evaluation results are shown in Table 7.

Example 15

A lithium secondary cell was prepared in the same manner as in Example 11 except that in Example 11, a lithium-nickel compound oxide ($LiNi_{0.82}Co_{0.15}Al_{0.03}O_2$) having a specific surface are of 0.92 $m^2/g$ was used. The lithium secondary cell thus obtained was evaluated by "Bulging test 1 of the lithium secondary cell during the storage at a high temperature" and "Measurement of initial capacity of cell". The evaluation results are shown in Table 7.

Comparative Example 5

A lithium secondary cell was prepared in the same manner as in Reference Example 1 except that in Reference Example 1, a lithium-nickel compound oxide ($LiNi_{0.82}Co_{0.15}Al_{0.03}O_2$) having a specific surface are of 0.60 $m^2/g$ was used and no dimethyl sulfoxide was added. The lithium secondary cell thus obtained was evaluated by "Bulging test 1 of the lithium secondary cell during the storage at a high temperature" and "Measurement of initial capacity of cell". The evaluation results are shown in Table 7.

Table 7

| | Sulfur compound added | Specific surface area of the lithium nickel compound oxide ($m^2/g$) | Bulging of the lithium secondary cell during the storage at a high temperature (*4) | Initial cell capacity (relative value) |
|---|---|---|---|---|
| Ex. 11 | Dimethyl sulfone | 0.38 | Nil | 101 |
| Ex. 13 | Dimethyl sulfone | 0.60 | Small | 101 |
| Ex. 14 | Dimethyl sulfone | 0.74 | Medium | 102 |

*4: Indicates the evaluation results in "Bulging test 1 of the lithium secondary cell during the storage at a high temperature". As observed by a naked eye, the bulging degree was classified into "large", "medium", "small" and "nil".

Table 7 (continued)

| | Sulfur compound added | Specific surface area of the lithium nickel compound oxide ($m^2$/g) | Bulging of the lithium secondary cell during the storage at a high temperature (*4) | Initial cell capacity (relative value) |
|---|---|---|---|---|
| Ex. 15 | Dimethyl sulfone | 0.92 | Medium | 102 |
| Comp. Ex. 1 | Nil | 0.38 | Large | 100 |
| Comp. Ex. 5 | Nil | 0.60 | Large | 101 |

*4: Indicates the evaluation results in "Bulging test 1 of the lithium secondary cell during the storage at a high temperature". As observed by a naked eye, the bulging degree was classified into "large", "medium", "small" and "nil".

From the results in Table 7, it is evident that even if the specific surface area of the lithium-nickel compound oxide is changed within a range of from 0.38 to 0.92 $m^2$/g, bulging of the lithium secondary cell during the storage at a high temperature can be controlled within a range of from "medium" to "nil", if dimethyl sulfone is incorporated as a compound having at least one double bond between sulfur and oxygen. This indicates that in such a lithium secondary cell system, dimethyl sulfone will be an additive $\alpha$ of the present invention. On the other hand, it is evident that in a case where no dimethyl sulfone is incorporated, the bulging will be "large" even with a specific surface area of either 0.38 or 0.60 $m^2$/g.

E. Influences of the addition of an organic acid and/or a lithium salt of an organic acid to the positive electrode

Example 16

A lithium secondary cell was prepared in the same manner as in Reference Example 1 except that in Reference Example 1, the method for producing the positive electrode was changed as follows. Namely, in order to incorporate oxalic acid to the positive electrode, a coating material for the production of a positive electrode was prepared to have the following composition.

Composition of the coating material for the production of a positive electrode

- Lithium-cobalt compound oxide ($LiCoO_2$) 27 parts
- $LiNi_{0.82}Co_{0.15}Al_{0.03}O_2$ 63 parts
- Acetylene black 5 parts
- Polyvinylidene fluoride 5 parts
- Oxalic acid 0.4 part
- N-methyl-2-pyrrolidone 80 parts

The above materials were kneaded for 2 hours by a planetary mixer type kneader to obtain a coating material for the production of a positive electrode. Then, the above coating material for the production of a positive electrode was coated on an aluminum current collector substrate having a thickness of 15 $\mu$m by extrusion type die coating, and dried to obtain a positive electrode material layer having an active material fixed on a current collector by a binder. Then, an electrode sheet was produced by compaction treatment using a roll press (calender). Thereafter, from the electrode sheet, an electrode was cut out to obtain a positive electrode. The weight of the positive electrode active material was 10 mg/$cm^2$.

The lithium secondary cell thus obtained was evaluated by "Bulging test 1 of the lithium secondary cell during the storage at a high temperature" and "Measurement of initial capacity of cell". The evaluation results are shown in Table 8.

Example 17

A lithium secondary cell was prepared in the same manner as in Example 16 except that in Example 16, dimethyl sulfoxide in the composition of the electrolyte precursor solution was changed to tetramethylene sulfoxide. The lithium secondary cell thus obtained was evaluated by "Bulging test 1 of the lithium secondary cell during the

storage at a high temperature" and "Measurement of initial capacity of cell". The evaluation results are shown in Table 8.

Example 18

A lithium secondary cell was prepared in the same manner as in Example 16 except that in Example 16, dimethyl sulfoxide in the composition of the electrolyte precursor solution was changed to dimethyl sulfite. The lithium secondary cell thus obtained was evaluated by "Bulging test 1 of the lithium secondary cell during the storage at a high temperature" and "Measurement of initial capacity of cell". The evaluation results are shown in Table 8.

Example 19

A lithium secondary cell was prepared in the same manner as in Example 16 except that in Example 16, dimethyl sulfoxide in the composition of the electrolyte precursor solution was changed to ethylene sulfite. The lithium secondary cell thus obtained was evaluated by "Bulging test 1 of the lithium secondary cell during the storage at a high temperature" and "Measurement of initial capacity of cell". The evaluation results are shown in Table 8.

Example 20

A lithium secondary cell was prepared in the same manner as in Example 16 except that in Example 16, dimethyl sulfoxide in the composition of the electrolyte precursor solution was changed to dimethyl sulfone. The lithium secondary cell thus obtained was evaluated by "Bulging test 1 of the lithium secondary cell during the storage at a high temperature" and "Measurement of initial capacity of cell". The evaluation results are shown in Table 8.

Example 21

A lithium secondary cell was prepared in the same manner as in Example 16 except that in Example 16, dimethyl sulfoxide in the composition of the electrolyte precursor solution was changed to sulfolane. The lithium secondary cell thus obtained was evaluated by "Bulging test 1 of the lithium secondary cell during the storage at a high temperature" and "Measurement of initial capacity of cell". The evaluation results are shown in Table 8.

Example 22

A lithium secondary cell was prepared in the same manner as in Example 16 except that in Example 16, dimethyl sulfoxide in the composition of the electrolyte precursor solution was changed to methyl methane sulfonate. The lithium secondary cell thus obtained was evaluated by "Bulging test 1 of the lithium secondary cell during the storage at a high temperature" and "Measurement of initial capacity of cell". The evaluation results are shown in Table 8.

Example 23

A lithium secondary cell was prepared in the same manner as in Example 16 except that in Example 16, dimethyl sulfoxide in the composition of the electrolyte precursor solution was changed to 1,3-propane sultone. The lithium secondary cell thus obtained was evaluated by "Bulging test 1 of the lithium secondary cell during the storage at a high temperature" and "Measurement of initial capacity of cell". The evaluation results are shown in Table 8.

Example 24

A lithium secondary cell was prepared in the same manner as in Example 16 except that in Example 16, dimethyl sulfoxide in the composition of the electrolyte precursor solution was changed to diethyl sulfate. The lithium secondary cell thus obtained was evaluated by "Bulging test 1 of the lithium secondary cell during the storage at a high temperature" and "Measurement of initial capacity of cell". The evaluation results are shown in Table 8.

Example 25

A lithium secondary cell was prepared in the same manner as in Example 16 except that in Example 16, dimethyl sulfoxide in the composition of the electrolyte precursor solution was changed to ethylene glycol sulfuric acid ester. The lithium secondary cell thus obtained was evaluated by "Bulging test 1 of the lithium secondary cell during the storage at a high temperature" and "Measurement of initial capacity of cell". The evaluation results are shown in Table 8.

Comparative Example 6

A lithium secondary cell was prepared in the same manner as in Example 16 except that in Example 16, no dimethyl sulfoxide was added in the composition of the electrolyte precursor solution. The lithium secondary cell thus obtained was evaluated by "Bulging test 1 of the lithium secondary cell during the storage at a high temperature" and "Measurement of initial capacity of cell". The evaluation results are shown in Table 8.

Table 8

| | Additive (sulfur compound) | Amount (amount to the electrolytic solution) | Bulging of the lithium secondary cell during the storage at a high temperature (*5) | Initial cell capacity (relative value) |
|---|---|---|---|---|
| Ex. 16 | Dimethyl sulfoxide | 1.0 part | Medium | 100 |
| Ex. 17 | Tetramethylene sulfoxide | 1.0 part | Medium | 101 |
| Ex. 18 | Dimethyl sulfite | 1.0 part | Small | 101 |
| Ex. 19 | Ethylene sulfite | 1.0 part | Medium | 101 |
| Ex. 20 | Dimethyl sulfone | 1.0 part | Small | 102 |
| Ex. 21 | Sulfolane | 1.0 part | Small | 101 |
| Ex. 22 | Methyl methane sulfonate | 1.0 part | Small | 102 |
| Ex. 23 | 1,3-propane sultone | 1.0 part | Medium | 101 |
| Ex. 24 | Diethyl sulfate | 1.0 part | Medium | 100 |
| Ex. 25 | Ethylene glycol sulfuric acid ester | 1.0 part | Nil | 101 |
| Comp. Ex. 6 | Nil | - | Large | 100 |

*5: Indicates the evaluation results in "Bulging test 1 of the lithium secondary cell during the storage at a high temperature". As observed by a naked eye, the bulging degree was classified into "large", "medium", "small" and "nil".

From the results in Table 8, the following may be said when oxalic acid in the positive electrode is adjusted to be in a constant amount.

Firstly, from the results of Examples 16 to 25 and Comparative Example 6, it is evident that in a case where no sulfur compound is incorporated in the electrolyte, bulging of the lithium secondary cell during the storage at a high temperature will be "large", while by incorporating a sulfur compound having at least one double bond between sulfur and oxygen in the electrolytic solution, bulging of the lithium secondary cell during the storage at a high temperature can be suppressed to "medium", "small" or "nil". In other words, it is evident that simply by incorporating oxalic acid to the positive electrode, bulging of the lithium secondary cell during the storage at a high temperature cannot adequately be suppressed. Secondly, from a comparison between Examples 16 and 20 and a comparison between Examples 17 and 21, it is evident that by increasing the number of double bonds between sulfur and oxygen in the molecule from 1 to 2, bulging of the lithium secondary cell during the storage at a high temperature can further be reduced.

Thirdly, from a comparison between Examples 16 and 18 and a comparison between Examples 21 and 25, it is evident that by further bonding oxygen to the sulfur forming the double bond between the sulfur and oxygen, bulging of the lithium secondary cell during the storage at a high temperature can further be reduced.

Fourthly, from the results of the measurement of the initial cell capacities of Examples 16 to 25 and Comparative Example 6, it is evident that even if a sulfur compound having at least one double bond between sulfur and oxygen, is incorporated, the basic characteristics as a lithium secondary cell will not be deteriorated.

Example 26

A lithium secondary cell was prepared in the same manner as in Example 22 except that in Example 22, the content of oxalic acid in the positive electrode was changed to 0.3 part. The lithium secondary cell thus obtained was evaluated by "Bulging test 1 of the lithium secondary cell during the storage at a high temperature" and "Measurement

of initial capacity of cell". The evaluation results are shown in Table 9.

Example 27

A lithium secondary cell was prepared in the same manner as in Example 22 except that in Example 22, the content of oxalic acid in the positive electrode was changed to 0.6 part. The lithium secondary cell thus obtained was evaluated by "Bulging test 1 of the lithium secondary cell during the storage at a high temperature" and "Measurement of initial capacity of cell". The evaluation results are shown in Table 9.

Example 28

A lithium secondary cell was prepared in the same manner as in Example 22 except that in Example 22, the content of oxalic acid in the positive electrode was changed to 1.0 part. The lithium secondary cell thus obtained was evaluated by "Bulging test 1 of the lithium secondary cell during the storage at a high temperature" and "Measurement of initial capacity of cell". The evaluation results are shown in Table 9.

Example 29

A lithium secondary cell was prepared in the same manner as in Example 22 except that in Example 22, the content of methyl methane sulfonate was changed to 4.7 parts, and the amount oxalic acid added to the positive electrode was changed to 0.6 part. The lithium secondary cell thus obtained was evaluated by "Bulging test 1 of the lithium secondary cell during the storage at a high temperature" and "Measurement of initial capacity of cell". The evaluation results are shown in Table 9.

Example 30

A lithium secondary cell was prepared in the same manner as in Example 22 except that in Example 22, the content of methyl methane sulfonate was changed to 47 parts, and the amount of oxalic acid added to the positive electrode was changed to 0.6 part. The lithium secondary cell thus obtained was evaluated by "Bulging test 1 of the lithium secondary cell during the storage at a high temperature" and "Measurement of initial capacity of cell". The evaluation results are shown in Table 9.

Table 9

| | Amount of sulfur compound (amount to the electrolytic solution) | Amount of oxalic acid | Bulging of the lithium secondary cell during the storage at a high temperature (*6) | Initial cell capacity (relative value) |
|---|---|---|---|---|
| Ex. 26 | 1.0 part | 0.3 part | Medium | 103 |
| Ex. 22 | 1.0 part | 0.4 part | Small | 102 |
| Ex. 27 | 1.0 part | 0.6 part | Nil | 100 |
| Ex. 28 | 1.0 part | 1.0 part | Nil | 95 |
| Ex. 29 | 0.5 part | 0.6 part | Small | 101 |
| Ex. 30 | 5.0 parts | 0.6 part | Nil | 102 |

*6: Indicates the evaluation results in "Bulging test 1 of the lithium secondary cell during the storage at a high temperature". As observed by a naked eye, the bulging degree was classified into "large", "medium", "small" and "nil".

In Table 9, data of Example 22 are also presented for a detailed study of the relation between the amount of a sulfur compound as the additive $\alpha$ and the amount of oxalic acid.

From the results in Table 9, the following may be said with respect to the relation between the amount of the sulfur compound added to the electrolyte and the amount of oxalic acid added to the positive electrode. Firstly, from a comparison of Examples 26, 22, 27 and 28, it is evident that when the content of the sulfur compound in the electrolyte is made constant, bulging of the lithium secondary cell during the storage at a high temperature can be reduced from "medium" to "nil" by increasing the amount of oxalic acid added to the positive electrode from 0.3 part to 1.0 part. On the other hand, from a comparison of Examples 29, 27 and 30, it is evident that when oxalic acid in the positive electrode is made constant at 0.6 part, if the amount of the sulfur compound in the electrolyte is made to be at least 1.0 part,

bulging of the lithium secondary cell during the storage at a high temperature can substantially completely be suppressed. Further, from the results of Examples 26, 22 and 27, it is evident that when the sulfur compound in the electrolyte is made to be 1.0 part, even if oxalic acid in the positive electrode is changed within a range of from 0.3 to 0.6 part, the basic properties as a lithium secondary cell will not be deteriorated, and from the results of Examples 29, 27 and 30, it is evident that in a case where oxalic acid in the positive electrode is made to be 0.6 part, even if the sulfur compound in the electrolyte is changed within a range of from 0.5 to 5.0 parts, the basic characteristics as a lithium secondary cell will not be deteriorated. Further, with a lithium secondary cell (Example 28) wherein the sulfur compound is 1.0 part, and oxalic acid in the positive electrode is 1.0 part, although the initial cell capacity is low as compared with lithium secondary cells of other Examples, bulging of the lithium secondary cell during the storage at a high temperature can substantially completely be suppressed, and it is totally balanced as a lithium secondary cell.

Comparative Example 7

A lithium secondary cell was prepared in the same manner as in Example 16 except that in Example 16, no dimethyl sulfoxide was added and the content of oxalic acid in the positive electrode was 0.8 part. The lithium secondary cell thus obtained was evaluated by "Bulging test 1 of the lithium secondary cell during the storage at a high temperature" and "Measurement of initial capacity of cell". The evaluation results are shown in Table 10.

Comparative Example 8

A lithium secondary cell was prepared in the same manner as in Example 16 except that in Example 16, no dimethyl sulfoxide was added and the content of oxalic acid in the positive electrode was 1.0 part. The lithium secondary cell thus obtained was evaluated by "Bulging test 1 of the lithium secondary cell during the storage at a high temperature" and "Measurement of initial capacity of cell". The evaluation results are shown in Table 10.

Table 10

| | Sulfur compound | Amount of oxalic acid | Bulging of the lithium secondary cell during the storage at a high temperature (*7) | Initial cell capacity (relative value) |
|---|---|---|---|---|
| Comp. Ex. 1 | Nil | Nil | Large | 103 |
| Comp. Ex. 6 | Nil | 0.4 part | Large | 100 |
| Comp. Ex. 7 | Nil | 0.8 part | Medium | 96 |
| Comp. Ex. 8 | Nil | 1.0 part | Small | 93 |

*7: Indicates the evaluation results in "Bulging test 1 of the lithium secondary cell during the storage at a high temperature". As observed by a naked eye, the bulging degree was classified into "large", "medium", "small" and "nil".

In Table 10, data of Comparative Example 1 and Comparative Example 6 are also presented for a detailed study of the relation with the amount of oxalic acid.

From the results in Table 10, it is evident that in a case where no sulfur compound is incorporated in the electrolyte, up to the content of oxalic acid in the positive electrode being 0.4 part, no suppression of bulging of the lithium secondary cell during the storage at a high temperature is observed, but when the content is increased to 0.8 part or 1.0 part, the above bulging is suppressed to "medium" or "small". From the results, it is expected that if the content of oxalic acid in the positive electrode is further increased, bulging of the lithium secondary cell during the storage at a high temperature can be substantially completely suppressed. However, if attention is paid to the initial capacity of the cell, it is evident that an increase of the content of oxalic acid leads to a decrease of the initial capacity. Thus, it is evident that with this lithium secondary cell system, it will be necessary to incorporate an additive $\alpha$ into the electrolyte in addition to incorporation of oxalic acid into the positive.electrode, in order to obtain a lithium secondary cell having a high capacity, while suppressing bulging of the lithium secondary cell during the storage at a high temperature.

INDUSTRIAL APPLICABILITY

According to the present invention, by controlling the relation between the value for $\Delta$Esol(AN) of a non-aqueous solvent to be contained in the electrolyte and the value for $\Delta$Eadd(AN) of an additive $\alpha$ to be contained in the

cell element, it is possible to obtain a lithium secondary cell excellent in safety and storage characteristics without impairing the initial capacity, rate characteristics or cycle characteristics. Particularly, it is possible to obtain a lithium secondary cell excellent in safety during the storage at a high temperature and excellent in the initial cell capacity, while preventing bulging of the lithium secondary cell during the storage at a high temperature of the lithium secondary cell, which is problematic in a case where the casing which accommodates a cell element, is a variable shape casing.

The present invention has been described in detail with reference to specific embodiments, but it is apparent to those skills in the art that various changes and modifications may be made without departing from the scope and the intention of the present invention.

Further, the present application is based on a Japanese application (JP-2001-171851) filed on June 7, 2001, a Japanese application (JP-2001-179748) filed on June 14, 2001 and a Japanese application (JP-2001-192635) filed on June 26, 2001, and their entireties are included by reference.

## Claims

1. A lithium secondary cell comprising a cell element which comprises a positive electrode, a negative electrode and an electrolyte comprising a non-aqueous solvent and a solute, and a variable shape casing which accommodates the cell element, wherein the cell element contains an additive $\alpha$, and $\Delta$Eadd(AN) is smaller than $\Delta$Esol(AN), where $\Delta$Esol(AN) is the difference represented by Esol(A) - Esol(N), where Esol(N) is the enthalpy of a neutral molecule of the non-aqueous solvent and Esol(A) is the enthalpy of an anion radical formed by giving one electron to the neutral molecule, as obtained by the following calculation method (#), and $\Delta$Eadd(AN) is the difference represented by Eadd(A) - Eadd(N), where Eadd(N) is the enthalpy of a neutral molecule of the additive $\alpha$ and Eadd(A) is the enthalpy of an anion radical formed by giving one electron to the neutral molecule, as obtained by the following calculation method (#).

   Calculation method (#) :

   The enthalpy of a neutral molecule and the enthalpy of an anion radical are, respectively, obtained by quantum chemical calculations by an ab initio restricted Hartree-Fock molecular orbital method employing 6-31G* basis function system.

2. The lithium secondary cell according to Claim 1, wherein $\Delta$Esol(AN) - $\Delta$Eadd(AN), i.e. the difference between $\Delta$Esol (AN) and $\Delta$Eadd(AN), is at least 0.1 eV and at most 4 eV.

3. The lithium secondary cell according to Claim 1 or 2, wherein the additive $\alpha$ is a Lewis acid.

4. The lithium secondary cell according to any one of Claims 1 to 3, wherein the additive $\alpha$ is a sulfur compound having at least one sulfur-oxygen double bond.

5. The lithium secondary cell according to Claim 4, wherein the sulfur compound is represented by the following formula (1):

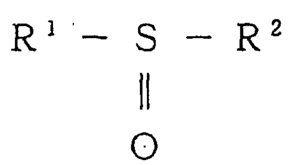

(1)

   (in the above formula (1), each of $R^1$ and $R^2$ which are independent of each other, is $X^1$ or O-$X^1$, where $X^1$ is a $C_{1-9}$ chain or cyclic saturated hydrocarbon group, a $C_{1-9}$ chain or cyclic unsaturated hydrocarbon group or a $C_{6-9}$ aromatic hydrocarbon group, provided that $R^1$ and $R^2$ may be bonded to each other to form a 5- or 6-membered ring containing the sulfur atom).

6. The lithium secondary cell according to Claim 4, wherein the sulfur compound is represented by the following formula (2):

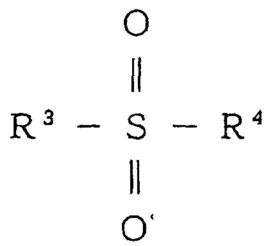

(2)

(in the above formula (2), each of $R^3$ and $R^4$ which are independent of each other, is $X^2$ or O-$X^2$, where $X^2$ is a $C_{1-9}$ chain or cyclic saturated hydrocarbon group, a $C_{1-9}$ chain or cyclic unsaturated hydrocarbon group or a $C_{6-9}$ aromatic hydrocarbon group, provided that $R^3$ and $R^4$ may be bonded to each other to form a 5- or 6-membered ring containing the sulfur atom).

**7.** The lithium secondary cell according to any one of Claims 4 to 6, wherein the sulfur compound is at least one member selected from the group consisting of diethyl sulfoxide, diphenyl sulfoxide, tetramethylene sulfoxide, methyl methanesulfinate, ethyl ethanesulfinate, dimethyl sulfite, diethyl sulfite, 1,2-propylene glycol sulfite, 1,3-butylene glycol sulfite, diphenyl sulfite, ethylene sulfite, vinylene sulfite, dimethyl sulfone, diethyl sulfone, ethylmethyl sulfone, diphenyl sulfone, dibenzyl sulfone, sulfolane, 3-methyl sulfolane, 3-methyl sulfolene, methyl methane sulfonate, ethyl methanesulfonate, acetyl methanesulfonate, tetrahydrofurfuryl methanesulfonate, methyl ethanesulfonate, ethyl ethanesulfonate, methyl propanesulfonate, methyl benzenesulfonate, 1,3-propanesultone, 1,4-butanesultone, dimethyl sulfate, diethyl sulfate, ethylmethyl sulfate, methylphenyl sulfate, ethylene glycol sulfuric acid ester, 1,3-propanediol sulfuric acid ester and 1,4-butanediol sulfuric acid ester.

**8.** The lithium secondary cell according to any one of Claims 4 to 7, wherein the sulfur compound is contained in an electrolyte.

**9.** The lithium secondary cell according to any one of Claims 4 to 8, wherein the sulfur compound is contained in an amount of at least 0.001 part by weight and at most 30 parts by weight, to the total amount of the solute and the non-aqueous solvent.

**10.** The lithium secondary cell according to any one of Claims 1 to 9, wherein the positive electrode contains a lithium-nickel compound oxide.

**11.** The lithium secondary cell'according to Claim 10, wherein the lithium-nickel compound oxide is represented by the following formula (3):

$$Li_aNi_XCo_YAl_ZO_2 \quad (3)$$

(in the formula (3), a, X, Y and Z are, respectively, numbers which satisfy $0 \leqq a \leqq 1.1$, $0.5 \leqq X \leqq 1$, $0 \leqq Y \leqq 0.5$, $0 \leqq Z \leqq 0.1$, and $0.9 \leqq X+Y+Z \leqq 1.1$).

**12.** The lithium secondary cell according to Claim 10 or 11, wherein the specific surface area of the lithium-nickel compound oxide is within a range of from 0.01 to 10 $m^2/g$.

**13.** The lithium secondary cell according to any one of Claims 1 to 12, wherein the positive electrode contains an organic acid and/or a lithium salt of an organic acid.

**14.** The lithium secondary cell according to Claim 13, wherein the organic acid is a bivalent or higher valent organic acid.

**15.** The lithium secondary cell according to Claim 13, wherein the lithium salt of an organic acid is a lithium salt of a bivalent or higher valent organic acid.

**16.** The lithium secondary cell according to any one of Claims 13 to 15, wherein the positive electrode has a positive electrode material layer formed on a current collector, and the organic acid and/or the lithium salt of an organic

acid is contained in an amount within a range of at least 0.1 wt% and at most 1 wt%, based on the weight obtained by deducting the weight of the organic acid and/or the lithium salt of an organic acid from the total weight of the positive electrode material layer.

**17.** The lithium secondary cell according to any one of Claims 1 to 16, wherein the electrolyte further contains a polymer.

**18.** The lithium secondary cell according to Claim 17, wherein the polymer is a cross-linkable polymer.

**19.** The lithium secondary cell according to Claim 18, wherein the cross-linkable polymer is an acrylic polymer.

**20.** The lithium secondary cell according to any one of Claims 1 to 19, wherein the variable shape casing is made of a laminated film comprising a gas barrier layer and a resin layer.

Fig. 1

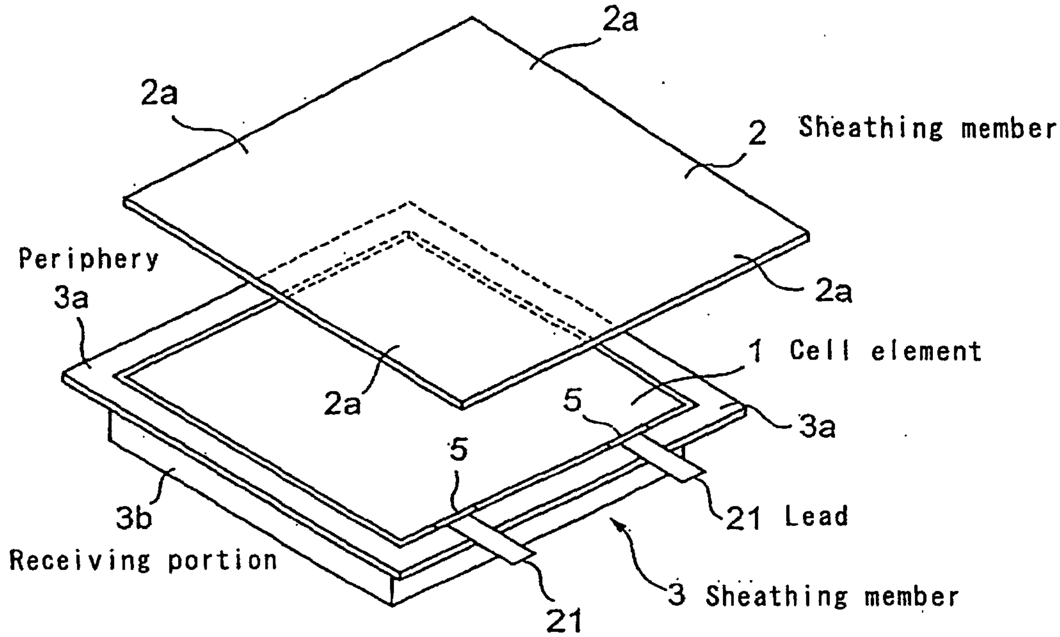
2a
2a
2 Sheathing member
Periphery
3a
2a
2a
1 Cell element
5
3a
5
21 Lead
3b
Receiving portion
3 Sheathing member
21

Fig.2

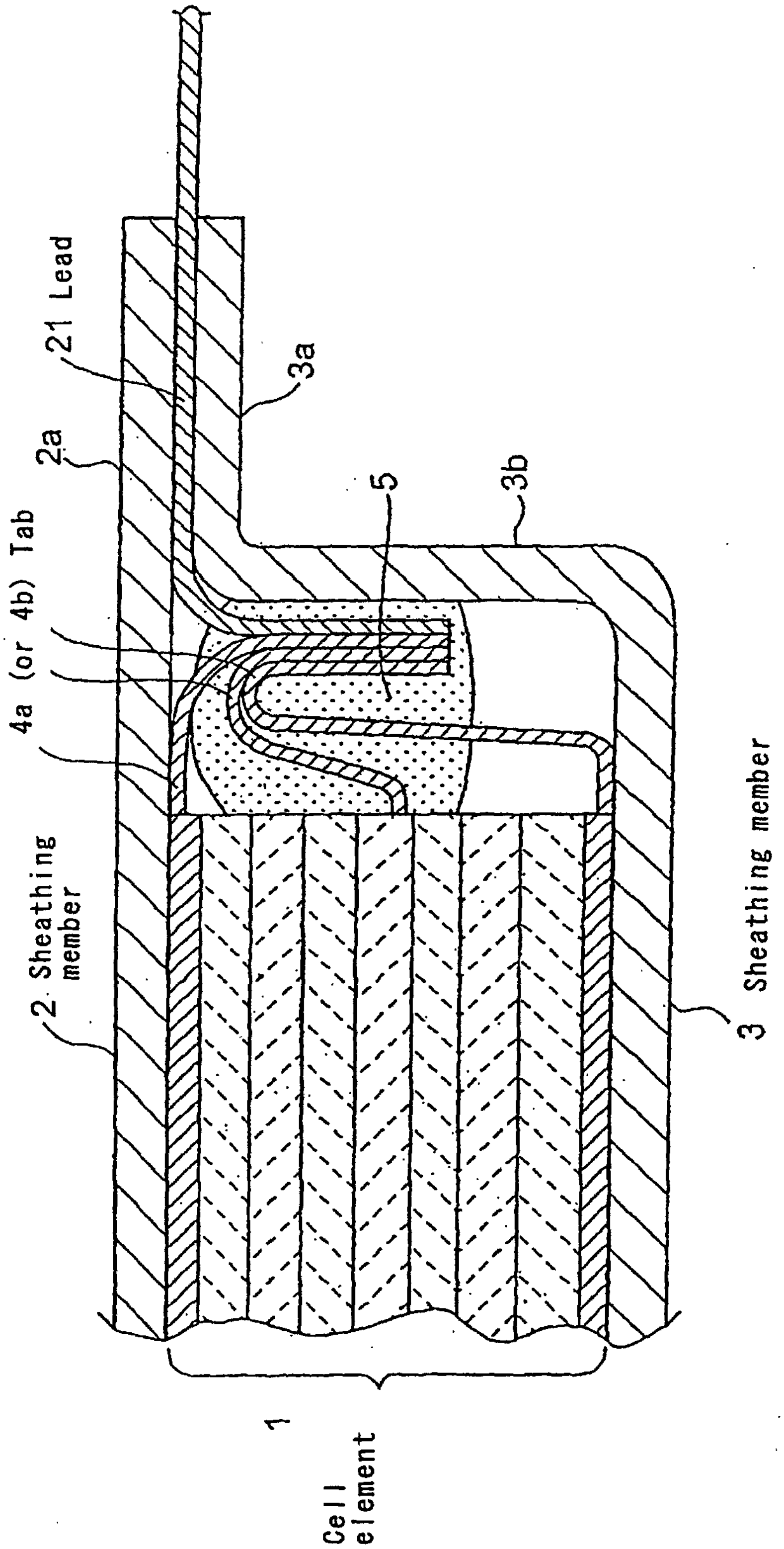
21 Lead
3a
2a
3b
5
4a (or 4b) Tab
2 Sheathing member
3 Sheathing member
1
Cell element

Fig.3

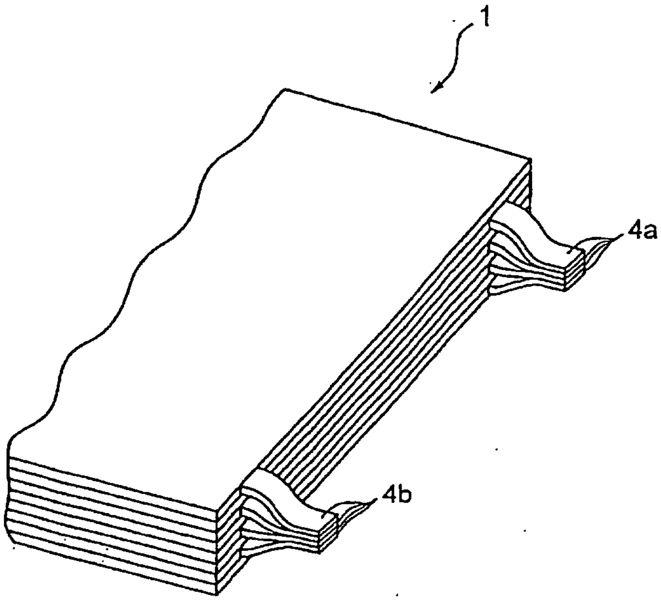
1
4a
4b

Fig.4

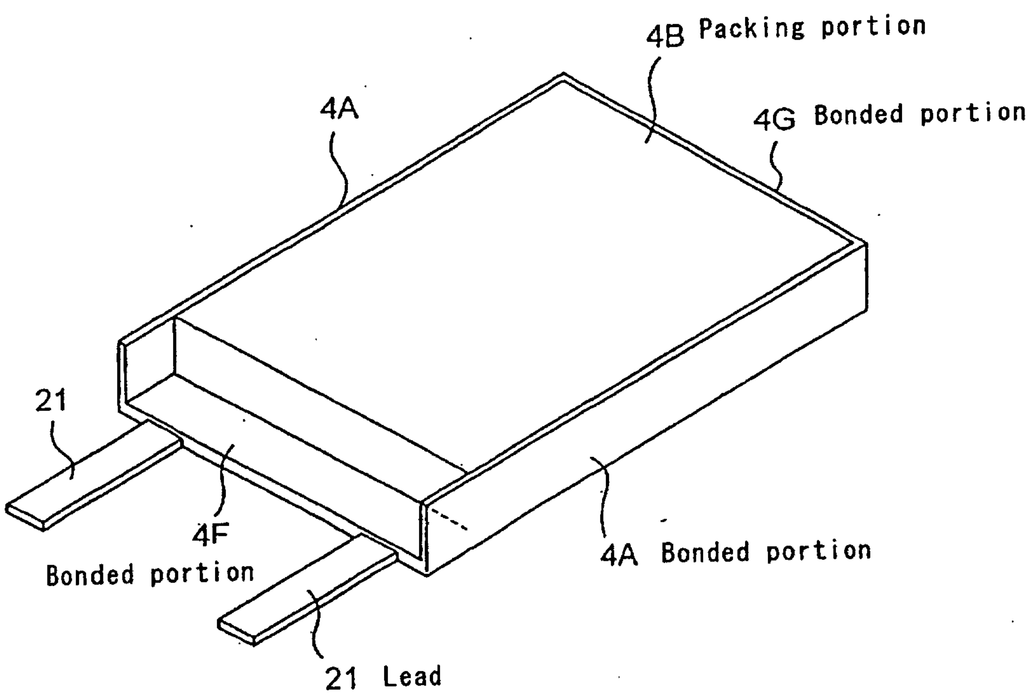
4B Packing portion
4A
4G Bonded portion
21
4F
Bonded portion
4A Bonded portion
21 Lead

# Fig.5

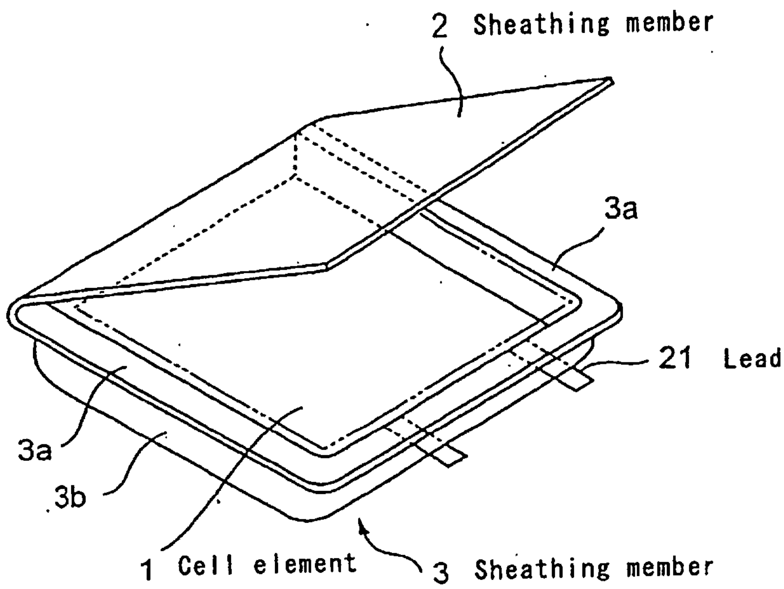
2 Sheathing member
3a
21 Lead
3a
3b
1 Cell element
3 Sheathing member

# Fig.6

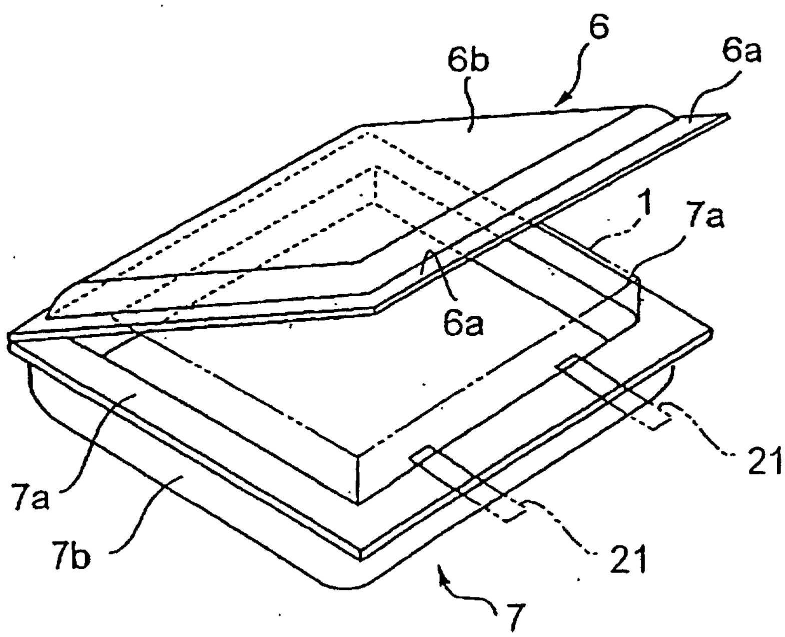
6
6b
6a
1
7a
6a
21
7a
7b
21
7

# Fig.7

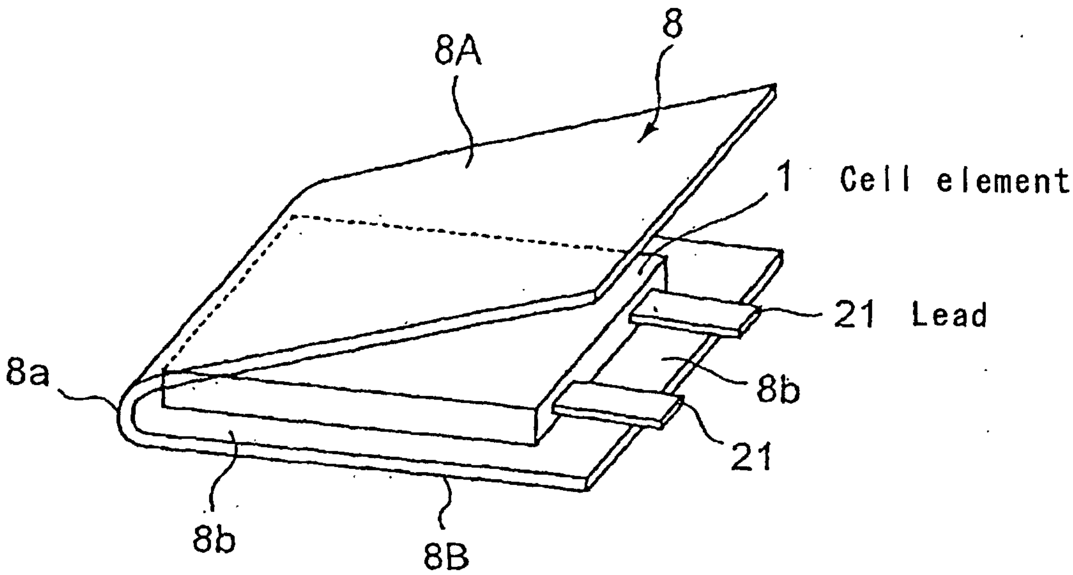


# Fig.8

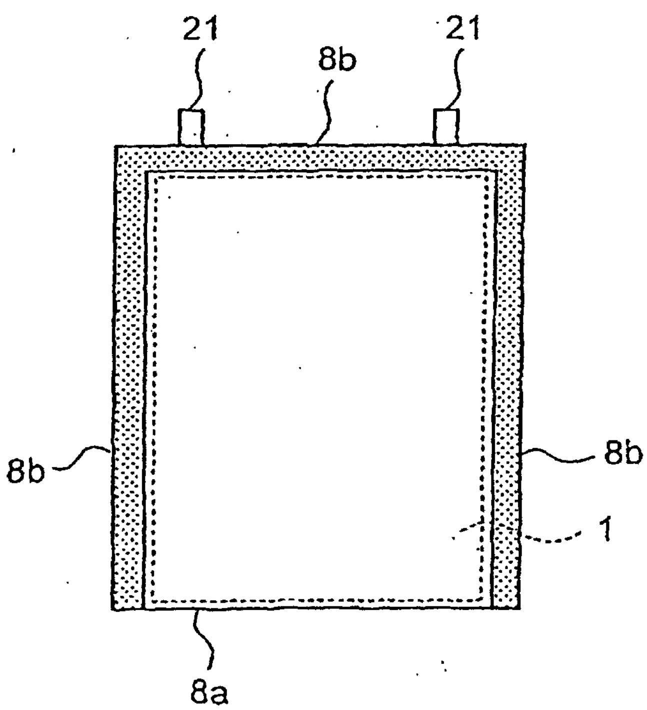

Fig. 9

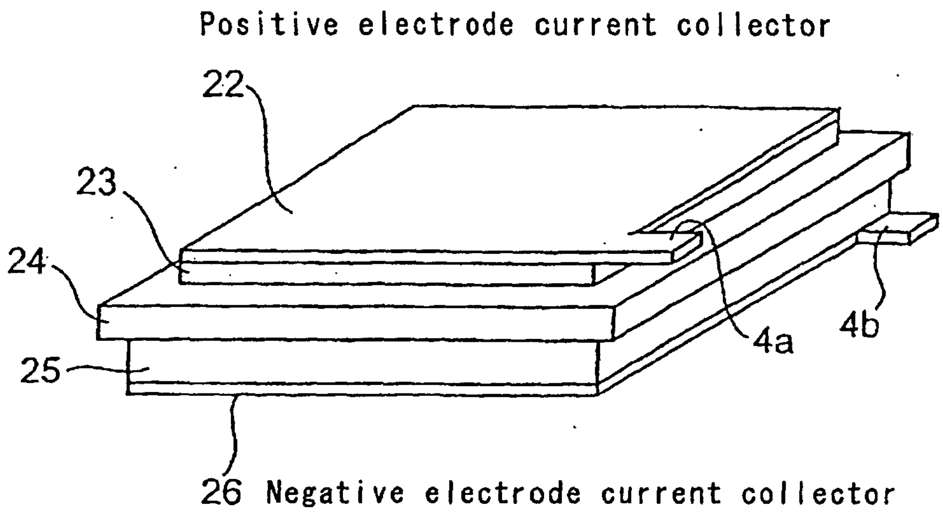


Fig. 10

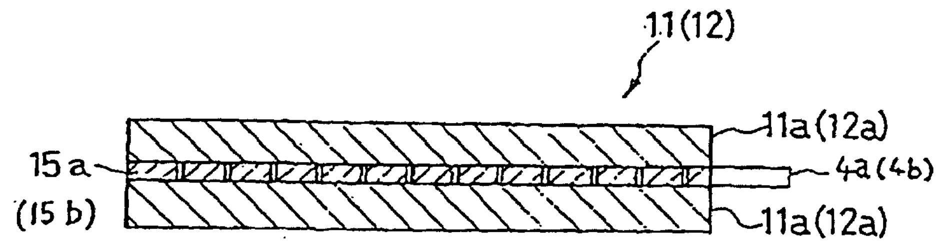


Fig. 11

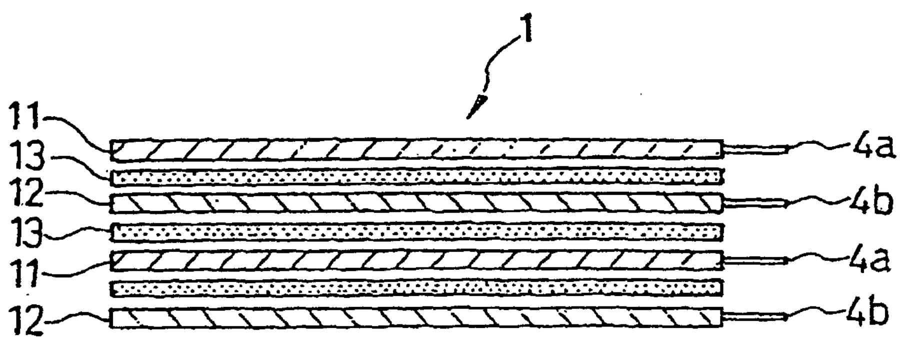

Fig. 12 (A)

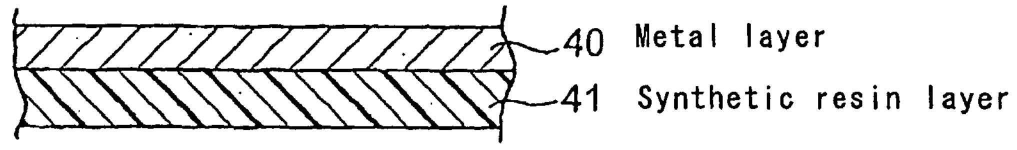


Fig. 12 (B)

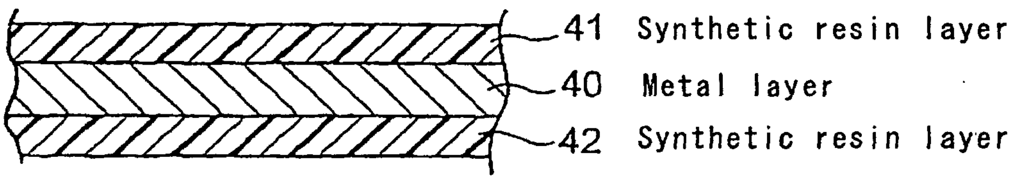


Fig. 13

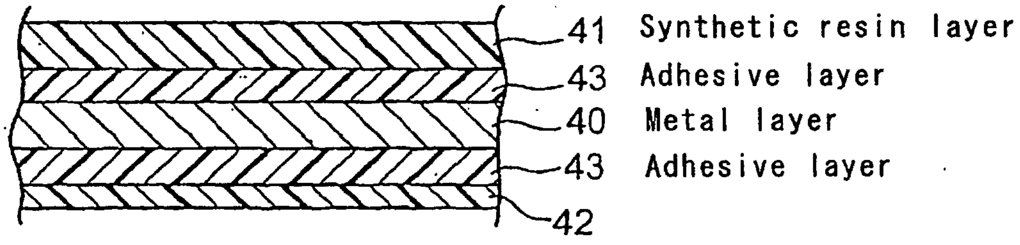

Fig. 14

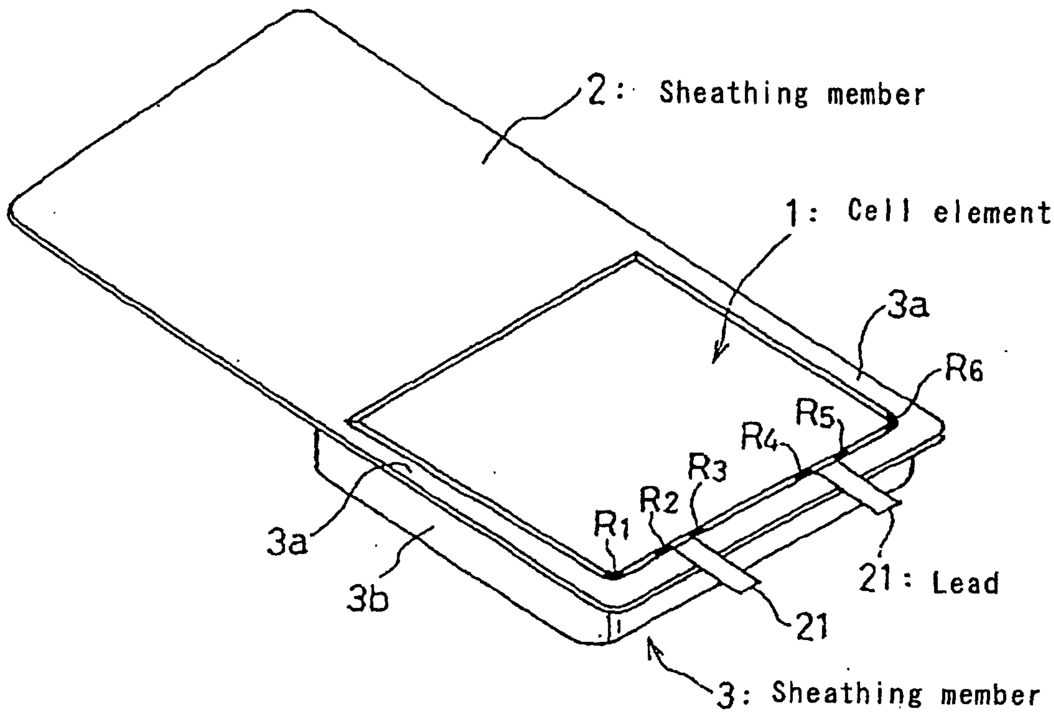
2: Sheathing member
1: Cell element
3a
R6
R5
R4
R3
R2
R1
3a
3b
21: Lead
21
3: Sheathing member

Fig. 15

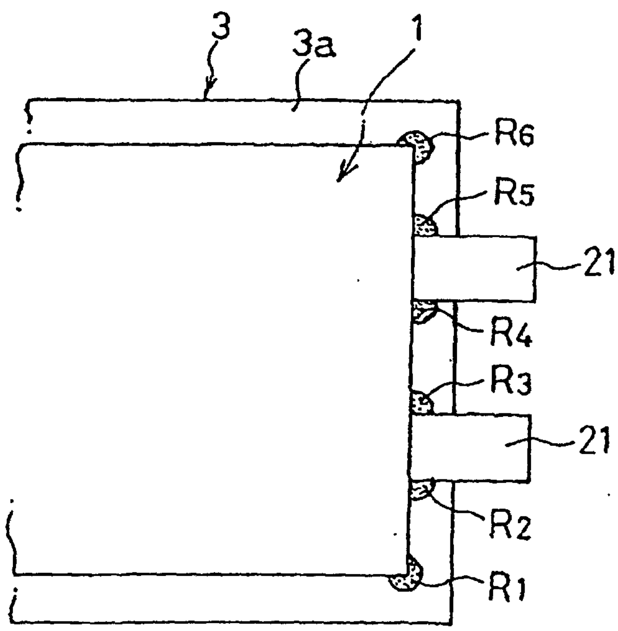
3
3a
1
R6
R5
21
R4
R3
21
R2
R1

# Fig. 16

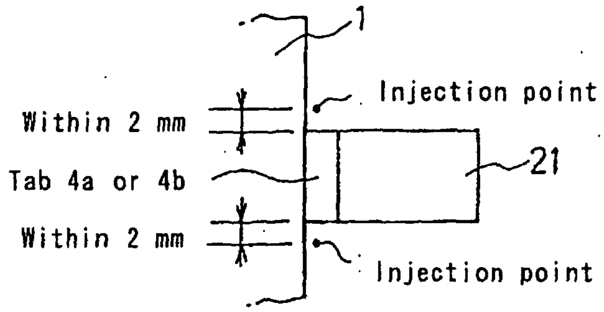


# Fig. 17

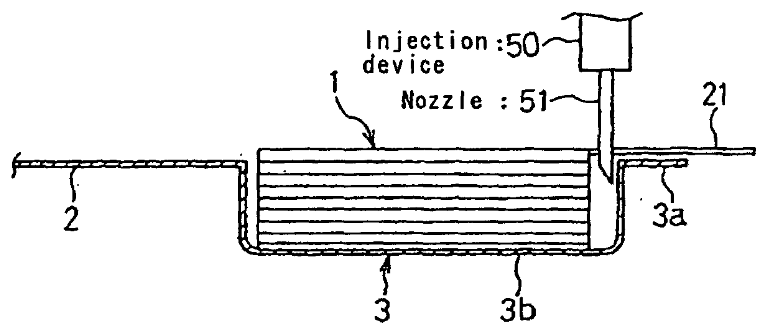


# Fig. 18

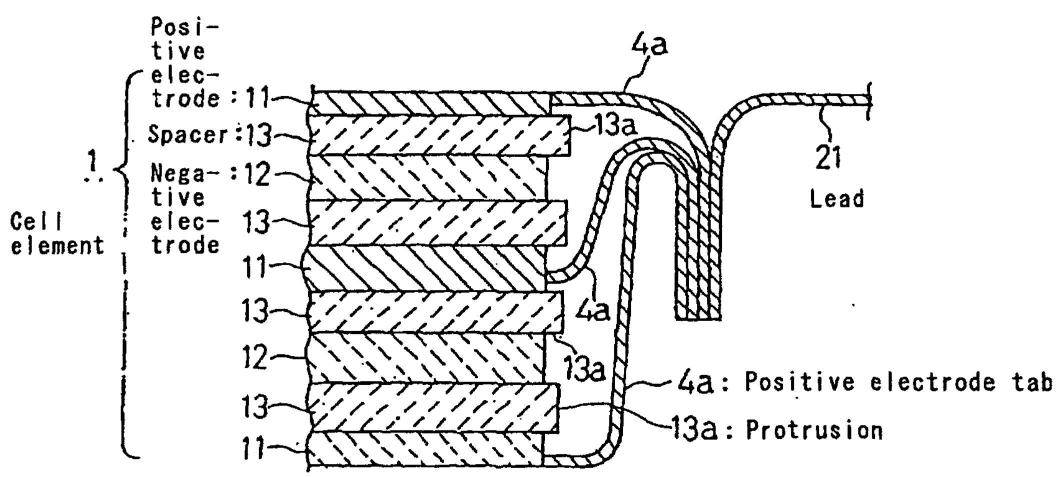

# Fig. 19

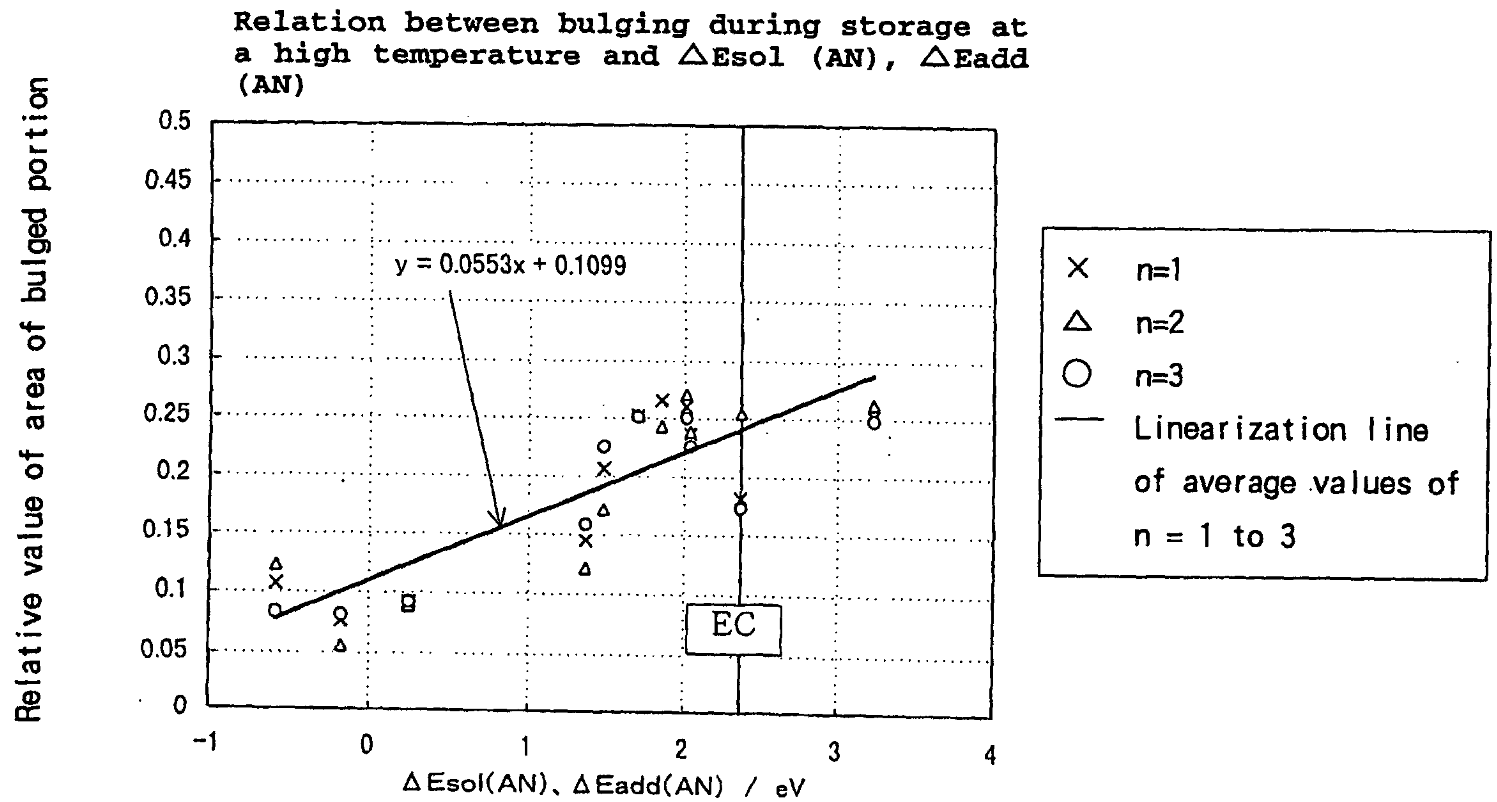
Relation between bulging during storage at a high temperature and ΔEsol (AN), ΔEadd (AN)
Relative value of area of bulged portion
0.5
0.45
0.4
0.35
0.3
0.25
0.2
0.15
0.1
0.05
0
-1
0
1
2
3
4
ΔEsol(AN)、ΔEadd(AN) / eV
y = 0.0553x + 0.1099
EC
n=1
n=2
n=3
Linearization line of average values of n = 1 to 3

## INTERNATIONAL SEARCH REPORT

International application No.
PCT/JP02/05656

A. CLASSIFICATION OF SUBJECT MATTER
Int.Cl$^7$ H01M10/40, 4/58, 4/62, 4/02, 2/02

According to International Patent Classification (IPC) or to both national classification and IPC

B. FIELDS SEARCHED

Minimum documentation searched (classification system followed by classification symbols)
Int.Cl$^7$ H01M10/40, 4/58, 4/62, 4/02, 2/02

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2001-217008 A (Sanyo Electric Co., Ltd.), 10 August, 2001 (10.08.01), Claims 1 to 6; Par. Nos. [0015], [0017], [0019]; examples (particularly, table 4) (Family: none) | 1-9,17-19 |
| P,X | JP 2002-83632 A (Matsushita Electric Industrial Co., Ltd.), 22 March, 2002 (22.03.02), Claims 1 to 18; Par. Nos. [0020], [0029], [0037] & WO 02/01665 A1 | 1-12,17,18, 20 |
| P,X | JP 2002-15771 A (Toshiba Corp.), 18 January, 2002 (18.01.02), Claims 1 to 17; Par. Nos. [0065], [0126], [0136], [0224], [0227], [0242] (Family: none) | 1-12,20 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>06 September, 2002 (06.09.02) | Date of mailing of the international search report<br>24 September, 2002 (24.09.02) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/05656

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2002-184462 A (Toshiba Corp.), 28 June, 2002 (28.06.02), Claims 1 to 21; Par. Nos. [0040], [0071] to [0095], [0144], [0151], [0161], [0164], [0169], [0173] (Family: none) | 1-12,20 |
| X<br>Y | JP 2001-84993 A (Kabushiki Kaisha AT Battery), 30 March, 2001 (30.03.01), Claims 1 to 18; Par. Nos. [0019], [0032], [0033]; examples (Family: none) | 1-3,10,11, 17-20<br>4-9,12-19 |
| X<br>Y | JP 11-354154 A (Japan Storage Battery Co., Ltd.), 24 December, 1999 (24.12.99), Par. Nos. [0015] to [0020] (Family: none) | 1-3,10,11, 20<br>4-9,12-19 |
| X<br>Y | JP 10-3945 A (Sony Corp.), 06 January, 1998 (06.01.98), Claims 1 to 10; Par. Nos. [0018], [0025]; examples (Family: none) | 1-3,10,11, 17-20<br>4-9,12-19 |
| X<br>Y | JP 2000-21446 A (Fuji Photo Film Co., Ltd.), 21 January, 2000 (21.01.00), Claims 1 to 3; Par. Nos. [0027] to [0029]; examples (Family: none) | 1-3,10-12, 17-20<br>4-9,12-19 |
| Y | JP 2001-28275 A (Mitsubishi Chemical Corp.), 30 January, 2001 (30.01.01), Claims 1 to 15; Par. Nos. [0074] to [0076] & US 6406817 B1 | 4-9 |
| Y | JP 2001-35451 A (Mitsubishi Chemical Corp.), 09 February, 2001 (09.02.01), Claims 1 to 24; Par. Nos. [0074] to [0076] & US 6224995 B1 | 4-9 |
| Y | JP 2000-58055 A (Mitsui Mining & Smelting Co., Ltd.), 25 February, 2000 (25.02.00), Claims 1 to 4 (Family: none) | 13-16 |
| Y | JP 2001-35495 A (Toyota Central Research And Development Laboratories, Inc.), 09 February, 2001 (09.02.01), Claims 1 to 3 (Family: none) | 13-16 |
| Y | JP 9-213375 A (Sony Corp.), 15 August, 1997 (15.08.97), Claim 1; Par. No. [0011] (Family: none) | 13-16 |
| Y | JP 10-79244 A (Toray Industries, Inc.), 24 March, 1998 (24.03.98), Claims 1 to 11 (Family: none) | 13-16 |

Form PCT/ISA/210 (continuation of second sheet) (July 1998)